(19) Europäisches Patentamt European Patent Office Office européen des brevets

(11) **EP 4 685 755 B1**

(12) **EUROPEAN PATENT SPECIFICATION**

(45) Date of publication and mention
of the grant of the patent:
**01.07.2026 Bulletin 2026/27**

(21) Application number: **24190168.5**

(22) Date of filing: **22.07.2024**

(51) International Patent Classification (IPC):
**G06V 10/82** $^{(2022.01)}$ **A61L 15/00** $^{(2006.01)}$

(52) Cooperative Patent Classification (CPC):
**G06V 10/82**

(54) **METHOD FOR DETECTING ADHESIVE ON SKIN**

VERFAHREN ZUM NACHWEIS VON KLEBSTOFF AUF DER HAUT

PROCÉDÉ DE DÉTECTION D'ADHÉSIF SUR LA PEAU

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**28.01.2026 Bulletin 2026/05**

(73) Proprietor: **Beiersdorf AG
22529 Hamburg (DE)**

(72) Inventors:
• **MEHR, Tamim
22303 Hamburg (DE)**
• **OSORIO BLANCO, Ernesto Rafael
22767 Hamburg (DE)**
• **POLEGRE SOLIS, Augustin Nicolas
22457 Hamburg (DE)**

(74) Representative: **Haseltine Lake Kempner LLP
Cheapside House
138 Cheapside
London EC2V 6BJ (GB)**

(56) References cited:
• **CHUNG GRACE ET AL: "Optimizing Ultraviolet
Illumination for Detecting Fluorescent
Orthodontic Adhesive Residues during
Debonding Procedures", vol. 17, no. 12, 17 June
2024 (2024-06-17), pages 2961, XP093236540,
ISSN: 1996-1944, Retrieved from the Internet
<URL:https://www.mdpi.com/1996-1944/17/12/
2961/pdf> [retrieved on 20250106], DOI: 10.3390/
ma17122961**
• **MARIA DEL PILAR BONILLA TOBAR ET AL:
"Skinly: A novel handheld IoT device for
validating biophysical skin characteristics",
SKIN RESEARCH AND TECHNOLOGY,
MUNKSGAARD, COPENHAGEN, DK, vol. 30, no.
3, 28 February 2024 (2024-02-28), pages n/a,
XP072609573, ISSN: 0909-752X, DOI: 10.1111/
SRT.13613**

## Description

## Technical Field

The present invention relates to a computer implemented method, computer program and information processing apparatus, of training a neural network model, in particular, to training a neural network model for detecting adhesive residue on skin. The present invention further relates to a computer implemented method for detecting adhesive residue on skin using a neural network model.

## Background

The analysis of adhesive residues is of great importance in the development of adhesives that are applied to the skin. Adhesive residues on the skin can have undesirable consequences with regard to the quality of a plaster or patch. For example, adhesive residues are an indication of cohesion breakage or fracture. Cohesion fracture describes the failure within the structure of a substance as a result of mechanical stress. In the case of adhesive residues, for example, garments can get stuck on the remnants and lead to a loss of comfort.

Tests may be performed to detect plaster residues on the skin. For this purpose, a research assistant applies plasters to the backs of test subjects and has them peeled off. After this removal, the application area is illuminated with an ultraviolet (UV) lamp to detect residues. The residues 'light up', or fluoresce, under the UV and may be documented.

A disadvantage of the above method is that only a very limited number of samples can be applied to the area and that only a very limited number of subjects can participate in the study due to the complexity of the method. A limited number of subjects, and thus data, leads to a possibly under-representative dataset, which may not be meaningful enough for a statistical assessment of the applicability of newly developed adhesives. Correlations between skin types, which differ greatly from each other in terms of their properties, and the properties of adhesives, cannot be tested either. Furthermore, the method must be carried out by a trained professional, who may develop prejudices over time regarding the assessment of adhesive residues. In addition, hiring new professionals can lead to unusual results due to a lack of experience.

It is therefore desirable to improve the testing and recognition process for adhesive residues on skin.

CHUNG GRACE ET AL: "Optimizing Ultraviolet Illumination for Detecting Fluorescent Orthodontic Adhesive Residues during Debonding Procedures", MATER, vol. 17, no. 12, 17 June 2024 (2024-06-17), page 2961, ISSN: 1996 1944, DOI: 10.3390/ma17122961 discloses that fluorescence-aided identification technique (FIT) studies for orthodontic resins are relatively new, using an arbitrary selection of resins, lights, and work parameters. In order to provide FIT guidelines for optimal visualization, the objectives of this study were to describe the electromagnetic characteristics of fluorescent orthodontic resins, determine appropriate light specification, and describe light and work parameter effects on resin fluorescence. Methods: This in vitro study assessed five fluorescent orthodontic resins and a non-fluorescent control resin using spectrophotometry, a scaled image analysis of 25 $\mu$m thick resins to compare intensities, and a visual assessment.

MARIA DEL PILAR BONILLA TOBAR ET AL: "Skinly: A novel handheld IoT device for validating biophysical skin characteristics", SKIN RESEARCH AND TECHNOLOGY, MUNKSGAARD, COPENHAGEN, DK, vol. 30, no. 3, 28 February 2024 (2024-02-28), ISSN: 0909-752X, DOI: 10.1111/SRT.13613 discloses that recent advancements in artificial intelligence have revolutionized dermatological diagnostics. These technologies, particularly machine learning (ML), including deep learning (DL), have shown accuracy equivalent or even superior to human experts in diagnosing skin conditions like melanoma. With the integration of ML, including DL, the development of at home skin analysis devices has become feasible. To this end, we introduced the Skinly system, a handheld device capable of evaluating various personal skin characteristics noninvasively. Materials and Methods: Equipped with a moisture sensor and a multi-light-source camera, Skinly can assess age-related skin parameters and specific skin properties. Utilizing state-of-the-art DL, Skinly processed vast amounts of images efficiently. The Skinly system's efficacy was validated both in the lab and at home, comparing its results to established "gold standard" methods.

## Summary of invention

The invention is defined in the independent claims, to which reference should now be made. Further features are set out in the dependent claims.

According to an aspect of the invention there is provided a computer implemented method of training a neural network model for detecting adhesive residue on skin comprising loading a pretrained neural network, replacing a pretrained layer in the pretrained neural network with an untrained layer, training the untrained layer using input images to classify the input images. A class of the input images may comprise an image of skin without an adhesive residue on the skin and another class of the input images may comprise an image of skin with an adhesive residue on the skin.

In a broader definition, there is provided a computer implemented method of training a neural network model for detecting predetermined features on skin comprising loading a pretrained neural network, replacing a pretrained layer in the pretrained neural network with an untrained layer, training the untrained layer using input images to classify the input images. A class of the input images may comprise an image of skin without a predetermined feature on the skin and another class of the input images may comprise an image of skin with a predetermined feature on the skin.

The untrained layer may be trained using each image in the input images by inputting an image of the input images into the pretrained neural network, generating a representation of the input image from a last layer of the pretrained neural network, inputting the representation of the input image into the untrained layer to generate a predicted class of the input image, comparing the predicted class of the input image with the class of the input image, optimizing a loss between the predicted class and the class of the image and updating a weight of the untrained layer according to the optimized loss. The images may be input as batches and the loss may be optimized once all images in the batch have been input into the model.

The loss may be optimized by minimizing a loss function. For example, the loss between the predicted class and a true class of the image may be minimized.

The last layer of the pretrained neural network may be convolutional layer, a pooling layer, an activation layer or a flattening layer.

The representation of the input image may be generated by inputting an output of the last layer of the pretrained neural network into a further untrained layer. The output may preferably be one or more features maps. That is, a feature map may be input into the further untrained layer.

The untrained layer may be a fully connected layer. The fully connected layer may be a one-unit dense layer for binary classification of the input images into a class of the input images. That is, the untrained layer may be configured to classify an image into a first class comprising images of skin without an adhesive residue on the skin and a second class comprising images of skin with an adhesive residue on the skin.

The further untrained layer may not be a fully connected layer. Preferably the further untrained layer may be a pooling layer, and more preferably the pooling layer may be a global average pooling 2D layer. The pooling layer may be configured to average the output of the last layer of the pretrained neural network to generate the representation. For example, the pooling layer may average the output of a convolutional layer or an activation layer.

The pretrained layer may be a fully connected layer. The fully connected layer may be used for classification. For example, the fully connected layer may be used to classify image into classes. The pretrained layer may be referred to as a pretrained prediction layer.

Further layers in the pretrained neural network may be replaced. The further layers may comprise a pooling layer and a dropout layer. The pooling layer may be an average pooling layer or a maximum pooling layer.

Once the untrained layer is trained, the neural network may be further trained using each image in the input images. The neural network may be further trained by inputting an image of the input images into the neural network, and adjusting a weight of a remaining layer of the pretrained neural network and the weight of the untrained layer during a backpropagation to fine-tune the weight of the remaining layer and the weight of the untrained layer. One or more remaining layers may be adjusted, or fine-tuned. The pretrained neural network may be partitioned into blocks. The weights of the layers in a block of the pretrained neural network may be adjusted during fine-tuning.

The input images may be pre-processed and/or augmented (e.g., data augmentation). The preprocessing may comprise padding and/or stretching the image. In particular, regions of the image with skin present may be padded and/or stretched. The data augmentation may comprise pixel operations and/or spatial operations on the input images. In the pixel operations, convolutional cores may be used to perform mathematical operations on a pixel and its surrounding pixels. In the spatial operations, transformations may change the spatial arrangement of pixels. The resolution of the input images may be adjusted to be the same resolution as training images used to train the pretrained neural network.

The pre-processing may additionally or alternatively comprise consecutive steps of optional contrast enhancement, followed by binarization, and then opening (necessary to get the contours of the image), followed by contouring and use of a bounding box constructed from the contouring, to remove the background of the skin image.

The input images may be augmented to generate new augmented input images for one or more training epochs of the neural network. The input images may be augmented between epochs during the training of the neural network model. New augmented input images may be generated for each training epoch of the neural network model.

An ability of the neural network model to identify intended regions in the input image for classification may be determined using, for example, a mean intensity of a gradient of a last convolutional layer of the neural network model. The intended regions may be regions of the input images with skin and/or skin with adhesive residue. The intended regions map be identified using a heatmap. That is, the mean intensity of gradient may be presented as a heatmap. The heatmap may be overlayed on the input image and may identify the intended regions.

The input images may be classified into three categories, a first category comprising images taken under direct illumination by a light source, a second category comprising images taken with a cross polarized filter applied and a third category comprising images taken under illumination of an ultraviolet light source. The input images may be captured using an imaging device such as a camera. In particular, the input images may be captured by a camera such as a skinly device, configured to take colored images, UV images and images filtered using a polarizing filter.

According to another aspect of the invention there is provided a computer program which, when run on a computer, causes the computer to carry out a method of training a neural network model for detecting adhesive residue (or another predetermined feature) on skin comprising loading a pretrained neural network, replacing a pretrained layer in the pretrained neural network with an untrained layer, training the untrained layer using input images to classify the input images. A class of the input images may comprise an image of skin without an adhesive residue (or without another predetermined feature) on the skin and another class of the input images may comprise an image of skin with an adhesive residue (or another predetermined feature) on the skin.

According to yet another aspect of the invention there is provided an information processing apparatus configured to train a neural network model for detecting adhesive residue (or another predetermined feature) on skin comprising a memory and a processor connected to the memory, wherein the processor is configured to load a pretrained neural network, replace a pretrained layer in the pretrained neural network with an untrained layer, train the untrained layer using input images to classify the input images. A class of the input images may comprise an image of skin without an adhesive residue (or without another predetermined feature) on the skin and another class of the input images may comprise an image of skin with an adhesive residue (or another predetermined feature) on the skin.

According to yet another aspect of the invention there is provided a computer implemented method for detecting adhesive residue (or another predetermined feature) on skin using a neural network model comprising, loading the neural network model which was trained by replacing a pretrained layer of the neural network with an untrained layer and then training the untrained layer using training images to classify the training images, a class of the training images comprising an image of skin without an adhesive residue (or without another predetermined feature) on the skin and another class of the training images comprising an image of skin with an adhesive residue (or another predetermined feature) on the skin, inputting an image of skin with or without adhesive residue on the skin, classifying the image into a class of the training images.

Embodiments of another aspect include a computer program which, when executed by a computer/ computing device/ teleconference device, causes the device to execute a method of an embodiment. The computer program may be stored on a computer-readable medium. The computer-readable medium may be non-transitory.

Embodiments of another aspect include a computer program which, when executed by a companion device, causes the companion device to execute a method of an embodiment. The computer program may be stored on a computer-readable medium. The computer-readable medium may be non-transitory.

The invention may be implemented in digital electronic circuitry, or in computer hardware, firmware, software, or in combinations thereof. The invention may be implemented as a computer program or a computer program product, i.e. a computer program tangibly embodied in a non-transitory information carrier, e.g. in a machine-readable storage device or in a propagated signal, for execution by, or to control the operation of, one or more hardware modules. A computer program may be in the form of a stand-alone program, a computer program portion, or more than one computer program, and may be written in any form of programming language, including compiled or interpreted languages, and it may be deployed in any form, including as a stand-alone program or as a module, component, subroutine, or other unit suitable for use in a data processing environment.

The invention is described in terms of particular embodiments. Other embodiments are within the scope of the following claims. For example, the steps of the invention may be performed in a different order and still achieve desirable results.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

**Brief description of drawings**

Reference is made, by way of example only, to the accompanying drawings in which:

**Figure 1** shows an overview of a convolutional neural network.

**Figure 2a** shows an example architecture for a neural network model used for detecting adhesive residue on skin;

**Figure 2b** shows another example architecture for a neural network model used for detecting adhesive residue on skin;

**Figure 3a** shows an example of fine-tuning a neural network model for detecting adhesive residue on skin;

**Figure 3b** shows another example of fine-tuning a neural network model for detecting adhesive residue on skin;

**Figure 4** shows images taken from an example dataset used for training a neural network model;

Figure 5a shows an example of a training image;

**Figure 5b** shows an example of a sequence of pre-processing methods applied to training images;

Figure 5c shows examples of data extension/augmentation methods applied to training images;

**Figure 6a** shows example steps of a method for training a neural network model for detecting adhesive residue on skin;

**Figure 6b** shows an example method for training a neural network model using an augmented dataset;

**Figure 6c** shows another example method for training a neural network model using another augmented dataset;

**Figure 7** shows images for verifying the classification capability of a neural network model;

**Figure 8** shows another example of images for verifying the classification capability of a neural network model;

**Figure 9a** shows further example images for verifying the classification capability of a neural network model;

**Figure 9b** shows an example analysis of a pre-processing technique;

**Figure 9c** shows an example analysis of another pre-processing technique;

**Figure 9d** shows an example comparison between pre-processing techniques;

**Figure 10a** shows receiver operating characteristic curves for evaluating the performance of a neural network model;

**Figure 10b** shows learning curves for evaluating a neural network model;

**Figure 11** shows an example implementation method of a neural network model;

**Figure 12** is a block diagram of an information apparatus, or computer device.

**Detailed description**

Since, as described above, adhesive residues can be detected by test methods, but these are prone to error with regard to human assessment, the inventors developed an analysis method which can detect adhesive residues or other predetermined features which are detectable with the human eye/using a camera on the skin. The analysis method developed by the inventors is based on the use of neural networks, and in particular convolutional neural networks (CNNs).

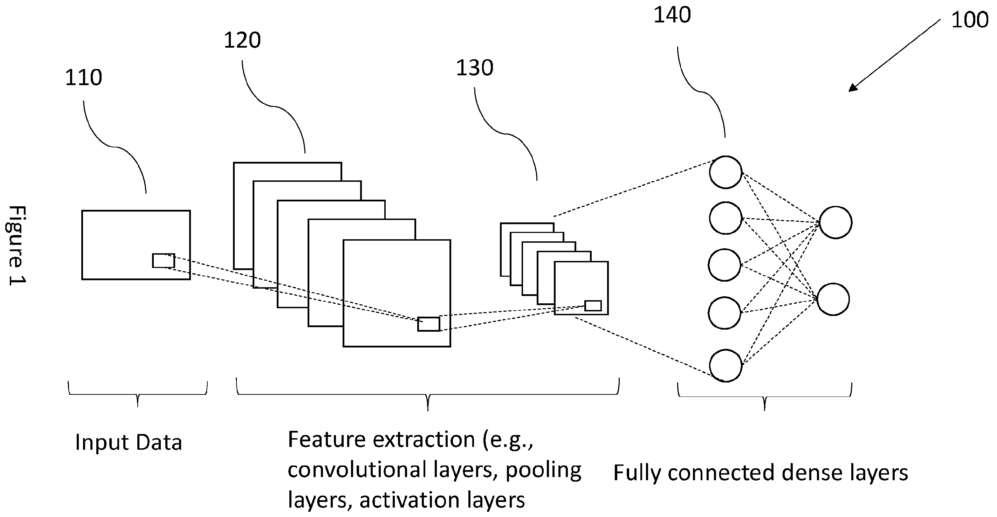

**Figure 1** gives a simplified overview 100 of a convolutional neural network. A convolutional neural network may be used as a tool to classify images. For this purpose, some convolutional neural networks may be pre-trained using large datasets containing general classes, such as buildings, animals or vehicles, in order to recognize general patterns, such as edges. This ranges from low-value patterns, such as colors or simple textures, to higher-value patterns, such as the spatial arrangement of objects in cities or landscapes.

As shown in Figure 1, a convolutional neural network may comprise an input layer 110, a convolutional layer 120, a pooling layer 130 and a fully connected layer 140.

The input layer 110 may be a layer which takes an input for the convolutional neural network. Generally, the input may be an image, or sequence of images. As an example, and image with dimensions WxHxd such as 254x254x3 or 32x32x3 may be input into a CNN, where W is the width of the image, H is the height of the image and d is the dimension of the image (i.e. 3 for a RGB image).

The convolutional layer 120 may be used to extract features from the input image(s). The convolutional layer may apply a set of learnable filters (which may be referred to as kernels) to process the input images. A width and a height of the kernels may be smaller than the width and height of the input image, and a depth of the kernel may be the same as the depth of the input image. Typical sizes of kernels are 2x2 and 3x3, but of course any suitable kernel size may be used. Any number of filters (or kernels) may be used in the convolutional layer(s).

A forward pass may be performed in which each filter is 'slid' across the input image at stepped intervals (known as strides). Typical values of strides are 2, 3 or 4 but a stride could be any number. A dot-product (scalar product) is calculated between weights in the kernel and a corresponding patch of the input image across which the kernel is slid. The size of the output of the convolutional layer may have the same height and width as the input layer and the same dimension as the number of kernels. For example, if the input image had the size 32x32x3 and 5 kernels were used in the convolutional layer, the output of the convolutional layer may be 32x32x5. The outputs of the convolutional layer may be referred to as feature maps. The feature maps generated by each kernel may be organized along a dimension known as a channel dimension. That is, each feature map may correspond to a channel representing the activation or response of the corresponding kernel to the input image.

Although not shown in the figure, the output of the convolutional layer may be input into an activation layer. The activation layer may comprise an activation function. The activation function may have fixed, or predetermined, weights which are not trainable. Any suitable activation function may be used, for example the rectified linear unit (ReLU) may be used. ReLU may produce sparse representations of the input data. The Relu is a non-linear function which can be defined as follows:

$$\text{If } x < 0 : f(x) = 0$$

$$\text{else } x >= 0: f(x) = x$$

A detailed description of how ReLU works is available at: Activation Functions in Neural Networks | by SAGAR SHARMA | Towards Data Science. Other activation functions which may be used are the hyperbolic tangent Tanh and the Leaky RELU.

The activation function adds non-linearity to the network and allows the CNN to learn complex patterns and relationships in the input data. The activation layer applies an element-wise activation function to the output of the convolutional layer with the size of the output from the activation layer remaining the same as the input from the convolutional layer.

The pooling layer 130 may be used to reduce the size of the output of the convolutional layer. Common pooling layers are a max pooling layer and an average pooling layer. The pooling operation may comprise sliding a pooling filter over each feature map (or each channel of the feature map). A stride length may be defined for the pooling filter. The pooling layer reduces the number of parameters required for learning in the CNN and therefore reduces the amount of computation performed in the network. The pooling layer may also help prevent overfitting.

Although a simplified representation of a CNN is shown in Figure 1, it may be understood that a CNN may have multiple convolutional, activation and pooling layers and that the order and number of layers may vary depending on the CNN. For example, a CNN may have a convolutional layer followed by an activation layer, followed by another convolutional layer and another activation layer and then a pooling layer. In another example, an CNN may have a convolutional layer followed by a pooling layer, followed by a convolutional layer, another convolutional layer, and activation layer and a pooling layer. Of course, other suitable layouts of CNN layers may be used.

The output of the pooling layer may be input into a flattening layer (not shown). The flattening layer may reshape the output of a preceding layer into a one-dimensional vector, which may be fed into the fully connected layer. The flattening layer changes the shape of the input (i.e., which may be a tensor), rearranging it to a one-dimensional vector. While the flattening layer rearranges the input, no data compression is performed.

The fully connected layer 140 may take an input from the previous layer (e.g. the flattening layer) and determine a classification (or regression) of the input image. The fully connected layer may be connected to each neuron of the previous layer. The fully connected layer may have adjustable weights and may be trained to, for example, classify objects in an image. The CNN may have a further output layer (which may be part of the fully connected layer) which may take an input from the fully connected layer and classify the output into a probability score for each class. The output layer may comprise a logistic function such as a SoftMax function or sigmoid function.

The convolutional neural network may be trained using a supervised learning technique. Training images with labelled features may be input into the CNN. As described above, a general CNN may be trained using large datasets containing general classes, such as buildings, animals, and/or vehicles. The CNN may be trained using known techniques such as backpropagation with an ADAM optimizer. The trained CNN may be used to classify new input images into a class based on the training data set (i.e. a building, animals or vehicles in the above example). Furthermore, through general training, the CNNs may recognize general patterns, such as edges and lines in input images.

The inventors found that machine learning systems, and in particular pretrained CNNs may be used to train systems to analyze and classify images with and without adhesive residues.

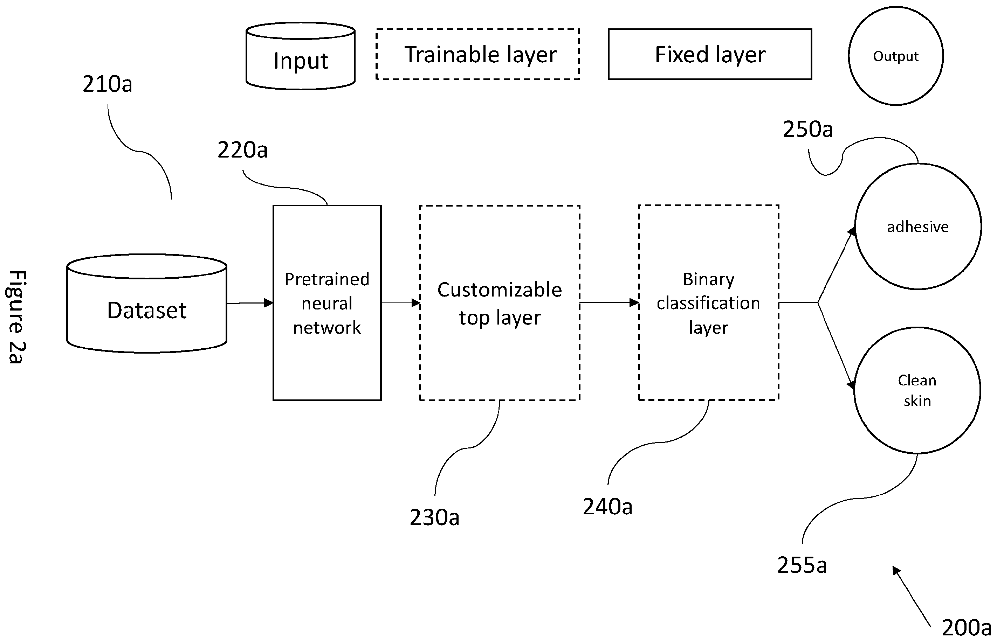

Figure 2a shows an example architecture 200a for a neural network model used for detecting adhesive residue on skin. The inventors found that a pretrained neural network 220a, in this example a convolutional neural network, may be adapted for detecting adhesive residue on skin. The pretrained CNN may be adapted using, for example, a transfer learning technique. The transfer learning technique may involve fine-tuning.

As described above, the pretrained CNN may be trained on a general image dataset (a first set of data), including objects such as buildings, animals, vehicles and any other suitably classified objects. The pretrained neural network used by the inventors was the Efficientnet CNN, and in particular the EfficientnetB7 CNN (Tan, M. and Le, Q., 2019, May. Efficientnet: Rethinking model scaling for convolutional neural networks. In International conference on machine learning (pp. 6105-6114). PMLR). The Efficientnet CNN was trained using the ImageNet database (https://www.imagenet.org/about.php) and is able to classify images into 1000 classes. Example, classes include varied classes such as "tiger shark", "stingray", "hen", "screw", "bottlecap", "remote control", "pillow", "soup bowl", etc. The pretrained CNN was not trained, or not substantially trained, to classify images containing adhesive residue or clean skin.

The convolutional layers of the pretrained CNN are effectively able to recognise edges, lines and patterns in input images. Thus, given a class of images in which the CNN was not trained on, the CNN may identify features, such as lines and edges in the image, but may fail to correctly classify the image.

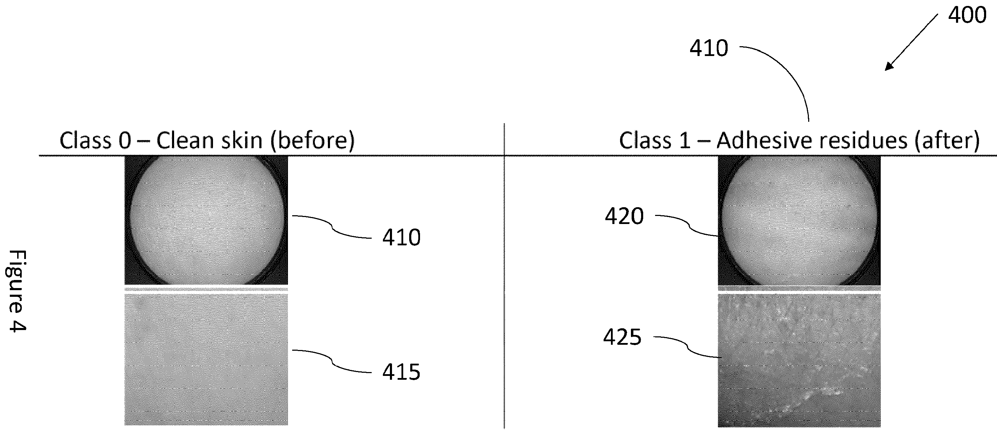

The inventors found that the CNN may be adapted to use the CNN's feature and pattern recognition to classify images belonging to an external (or second) dataset 210a (e.g. a dataset not used for training the pretrained CNN. That is a second dataset different from the first dataset). The inventors prepared a dataset with two classes of (labelled) images. The first class of images comprised images of skin without an adhesive residue on the skin and the second class of images comprised an image of skin with an adhesive residue on the skin. More details of the dataset, and how the dataset was prepared are provided in connection with Figure 4 below. The neural network model was trained to predict a class (i.e. a predicted class) of an input image, with a class being one of the two classes in the training dataset (images).

To train a neural network model for classifying the external dataset, the uppermost layer(s) of the pretrained convolutional neural network were replaced by new specially created, or custom, layer(s). These layers may be referred to as "top layers" 230a. Although shown as a separate layer, a binary classification layer 240a may be part of the customizable top layers. The top layers may be the layers in a CNN which, in their composition, are used for the classification capability of the CNN. The top layer(s) of the CNN may be a fully connected layer. The fully connected layer of the CNN may be used for classifying images into classes. The fully connected layer may be used in combination with an activation function for classifying images. In the Efficientnet pretrained CNN described above, the pretrained top layer of the pretrained neural network was trained on the imagenet dataset and was therefore trained to classify images into one of the one thousand classes in the imagenet dataset.

The inventors replaced the top pretrained layer of the pretrained neural network with an untrained (or customizable) layer. The untrained layer (e.g. the binary classification layer 240a) was a fully connected layer. That is, the untrained layer was implemented with connections to every output from a previous layer. The untrained layer may be initiated with random weights. The untrained layer used by the inventors was a 1-unit dense layer and was trained to output a binary classification (i.e., Adhesive Residues 250a or Clean Skin 255a), with a sigmoid activation function. Of course, other suitable activation functions may be used.

The inventors removed three of the top layers of the Efficientnet CNN. The three top layers removed from EfficientNetB7 were layers 815, 816 and 817, as they were trained on the pre-training dataset "imagenet". To implement a pre-trained CNN, such as EfficientNetB7, through Tensorflow, the following command was used: "include_top=False". This command removed the top three layers of the pretrained CNN. The top three layers of the efficientnet CNN correspond to

- Layer 815: avg_pool, (None, 2560)
- Layer 816: top_dropout, (None, 2560)
- Layer 817: predictions, (None, 1000)

In the Efficientnet CNN, the input size may not be restricted by a batch size. If a value (n) is set (instead of none in the parentheses), the network would only 'see' n-elements of data at once. Along with removing the fully connected layer, referred to as "predictions" above, a pooling layer (avg_pool) and a dropout layer (top_dropout) were also removed. The previous prediction class consisted of 1000 neurons, meaning it could predict 1000 classes. The inventors exchanged the prediction layer 817 with a Layer 3: dense, (None, 1) (i.e., Adhesive Residues or Clean Skin). Along with the new prediction layer, an average pooling layer was also re-introduced, as described below.

The inventors also introduced a further untrained layer (e.g. customizable top layer 230a). The further untrained layer introduced by the inventors was a pooling layer. In particular, the pooling layer was a GlobalAveragePooling2D() layer. The pooling layer may take an input from the last layer of the pretrained CNN, that is the last layer which is not replaced. The last layer may be, for example a convolutional layer or a pooling layer or an activation layer of the pretrained CNN. The global average pooling layer may reduce the spatial dimension of its received input into a two-dimensional feature map (more details of the function of the pooling layer is provided below). Hence, data compression is performed by computing the averaged outputs. The pooling layer may not be a fully connected layer.

In a first step of the training, only the new top untrained layers were trained. The process of only training the untrained layers may be referred to as preparatory training (or pre-training). For this purpose, the specially created top layers of the overall model may be adjusted in an adaptive way, while the 'neural layers' (i.e. convolutional layers), which originate from the pre-trained convolutional neural network, are fixed.

For training with the specially adapted network, the training images may be mechanically labeled according to their types (or class). This is to allow the machine neural network to be able to distinguish the image types from each other during learning. This type of machine learning is called "supervised learning." In this context, supervised means that during the training it is known what the correct answers are for the given inputs. If an image has been misclassified, the weights are adjusted between the layers that led to the wrong decision. The weights are adjusted as often as necessary until, ideally, all input data has been correctly assigned. More detail of the training images used to train neural network model are provided with refence to Figure 4 below.

The first step of learning was limited to the uppermost (i.e. top untrained) layers, as they are responsible for decision-making based on the characteristics from the pre-trained network. The remaining layers of the pretrained CNN were "frozen". That is, the weights of the pretrained layers were fixed (i.e., set as non-trainable). If the entire network was set as trainable, a learning iteration will adjust decision-making and feature discovery. The inventors found that this phenomenon is unfavorable, as the decision is very much dependent on the feature discovery. Thus, if the feature discovery changes simultaneously, even if only minimally, during the training, the decision may not be efficiently adapted to the given features.

The inventors looked to train the tops layers for an optimal generalization capability while avoiding overfitting. Too much tuning of decision-making should be avoided as this can lead to too strong prejudices. In biased models, the models classify the input data based on superficial and inconclusive features that could coincidentally correlate with the actual feature. Especially when data sets are limited in size, this can happen quickly, as incorrect and simple image patterns can be memorized, limiting the ability to generalize. An effective model is able to generalize in order to classify context-independently. However, a model that is over generalized is not advantageous either, as it can make decision-making difficult.

The untrained layers of the neural network model were trained over 100 learning cycles (epochs) with a learning rate of 1e-4 during the pre-training step. Backpropagation was utilized for the training and the Adam-optimizer with binary cross-entropy was used. Of course, other optimization algorithms may be used for training. As mentioned above, during the pre-training, only the custom untrained top layers were adapted. The top layers were trained to classify input images into two classes (or categories). The model was trained to classify the images into a first class of images comprising images of skin without an adhesive residue on the skin 255a and second class of the images comprising images of skin with an adhesive residue on the skin 250a.

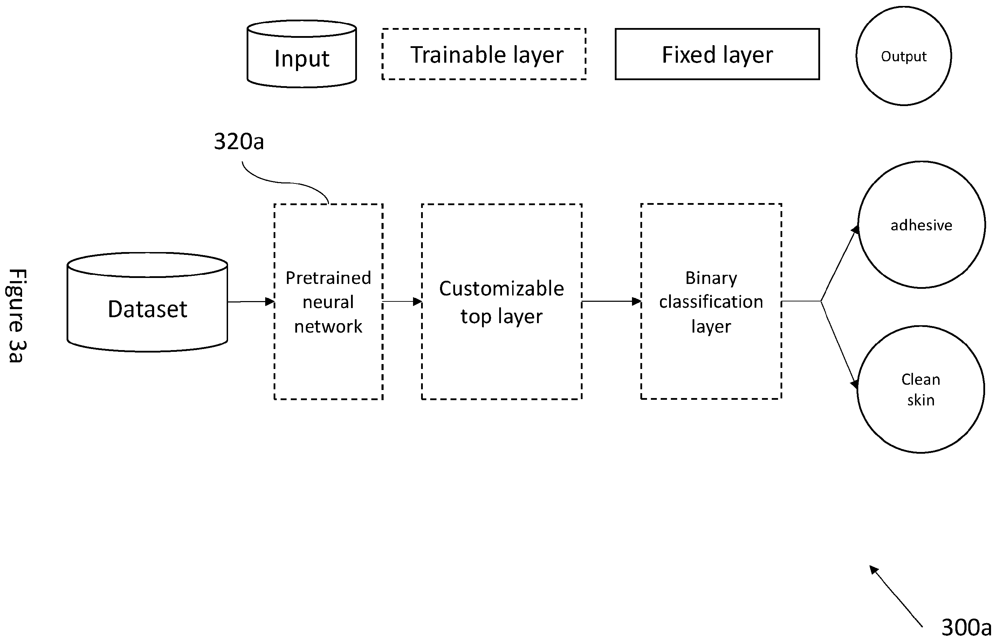

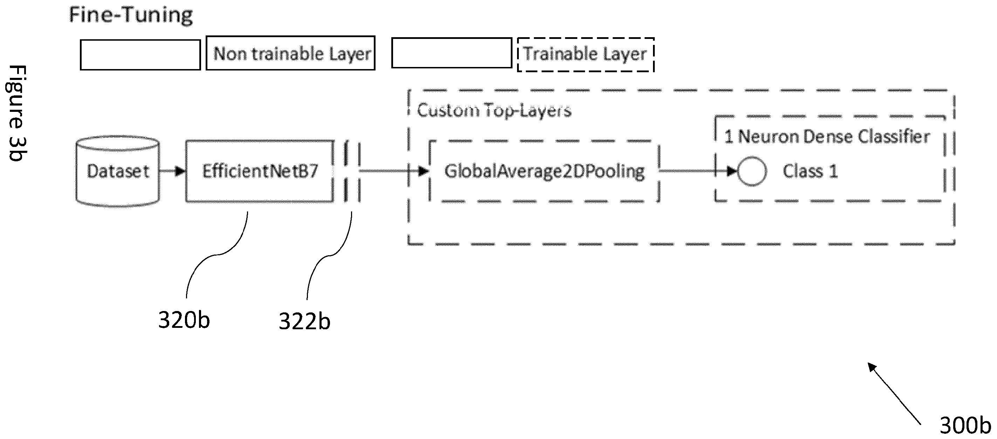

After the customizable top layers were trained, some (i.e. at least one) of the pretrained layers of the pretrained CNN were "unfrozen" and made available for further training, or fine-tuning. Details of the fine-tuning method are provided in relation to Figure 3a and 3b below.

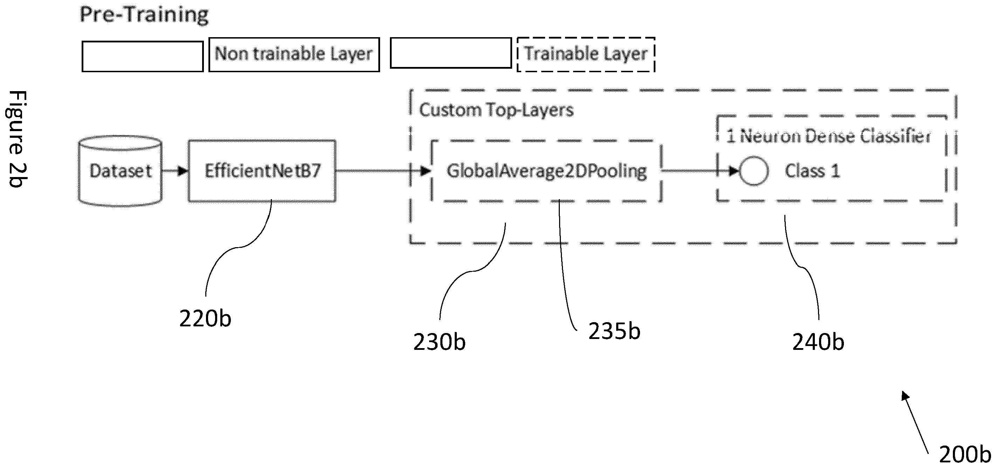

Figure 2b shows an example implementation 200b of the EfficientnetB7 neural network 220b model. In this example, the EfficientnetB7 NN may be the pretrained neural network 220a described in Figure 2a above. As described above, in a first training step (or phase, which may be referred to as a pre-training phase), the weights/layers of the Efficientnet NN may be fixed and custom top layers 230b may be trained.

In this example, the custom top layers 230b may include a GlobalAverage2DPooling layer 235b and a 1 Neuron Dense Classifier 240b (e.g., a binary classifier). The layers in the custom top layers may be set as trainable layers in the first training step.

Figure 3a shows an example 300a of fine-tuning a neural network model for detecting adhesive residue on skin.

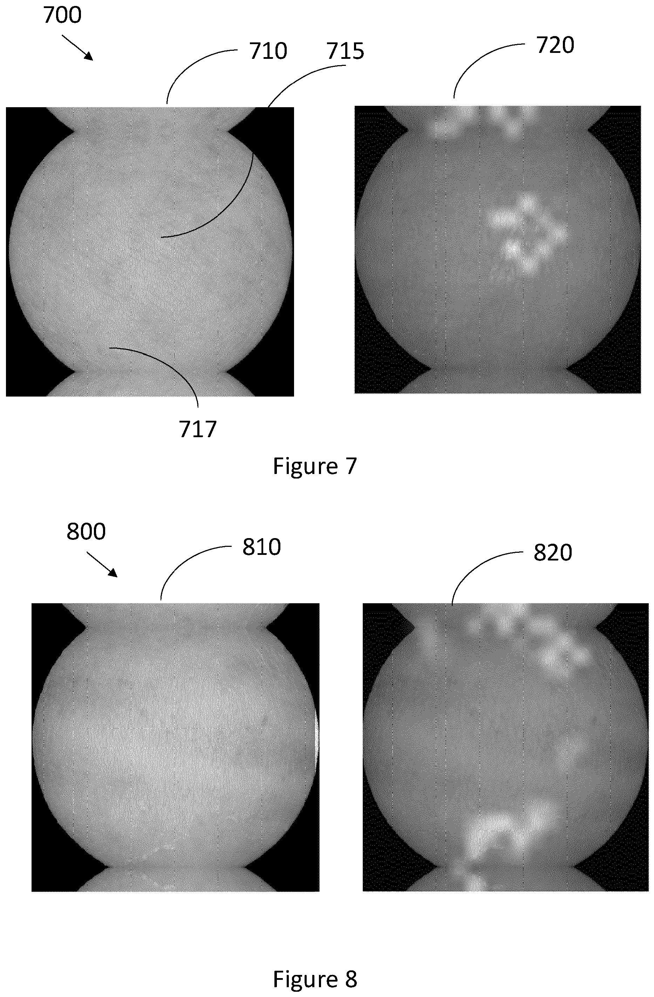

Once the training of the top untrained layers is achieved, fine-tuning of the pre-trained convolution network may be performed. During fine-tuning, layers of the pretrained neural network 320a were gradually set as trainable until the network detected the correct segments (i.e. segments with or without adhesive) on the training image via two-dimensional neural convolution nuclei. That is, the neural network model was trained to identify intended regions (which may be referred to as regions of interest, ROI) in the input image for the classification. More details of the fine-tuning, including using a Gradient-weighted Class Activation Mapping (GradCAM) for understanding which regions of an input image were used for the networks prediction of a particular class are provided in relation to Figures 7 and 8 below.

During a fine-tuning step, all or part of the base model (i.e. the pretrained CNN) may be set as trainable and the whole neural network model, including the customizable layers, may be retrained end-to-end. That is, weight(s) of a remaining layer (i.e. a layer not replaced by an untrained layer) of the pretrained neural network and weight(s) of the untrained layer may be adjusted during a backpropagation step.

The inventors surprisingly found that the best (in terms of classification ability) model was achieved when only some of the layers of the Efficientnet model were set as trainable. In particular, the top block, "block 7" of the EfficientNetB7 architecture was unfrozen for training. The inventors found that when all layers were set as trainable, there was a loss of the pre-learned feature extraction ability of the model and there was overfitting of the model. Block 7 of the efficientnetB7 architecture starts at a layer 753. Thus layer 753 and each layer above it was unfrozen for the fine-tuning step. Block 7 of the Efficientnet architecture includes the following layers: Conv2D Layers (conv), Batch Normalization Layers (bn), Activation Layers (activation), Depthwise Convolutional Layers (dwconv), Squeeze and Excitation Layers (squeeze, reshape, reduce, expand, excite), Dropout Layers (drop), Add layers Residual Connections (add). In particular, block 7 includes the layers:
Layer 754: block7a_expand_conv, (None, 19, 19, 2304); Layer 755: block7a_expand_bn, (None, 19, 19, 2304); Layer 756: block7a_expand_activation, (None, 19, 19, 2304); Layer 757: block7a_dwconv, (None, 19, 19, 2304); Layer 758: block7a_bn, (None, 19, 19, 2304); Layer 759: block7a_activation, (None, 19, 19, 2304); Layer 760: block7a_se_squeeze, (None, 2304); Layer 761: block7a_se_reshape, (None, 1, 1, 2304); Layer 762: block7a_se_reduce, (None, 1, 1, 96); Layer 763: block7a_se_expand, (None, 1, 1, 2304); Layer 764: block7a_se_excite, (None, 19, 19, 2304); Layer 765: block7a_project_conv, (None, 19, 19, 640); Layer 766: block7a_project_bn, (None, 19, 19, 640); Layer 767: block7b_expand_conv, (None, 19, 19, 3840); Layer 768:

block7b_expand_bn, (None, 19, 19, 3840); Layer 769: block7b_expand_activation, (None, 19, 19, 3840); Layer 770: block7b_dwconv, (None, 19, 19, 3840); Layer 771: block7b_bn, (None, 19, 19, 3840); Layer 772: block7-b_activation, (None, 19, 19, 3840); Layer 773: block7b_se_squeeze, (None, 3840); Layer 774: block7b_se_reshape, (None, 1, 1, 3840); Layer 775: block7b_se_reduce, (None, 1, 1, 160); Layer 776: block7b_se_expand, (None, 1, 1, 3840); Layer 777: block7b_se_excite, (None, 19, 19, 3840); Layer 778: block7b_project_conv, (None, 19, 19, 640); Layer 779: block7b_project_bn, (None, 19, 19, 640); Layer 780: block7b_drop, (None, 19, 19, 640); Layer 781: block7-b_add, (None, 19, 19, 640); Layer 782: block7c_expand_conv, (None, 19, 19, 3840); Layer 783: block7-c_expand_bn, (None, 19, 19, 3840); Layer 784: block7-c_expand_activation, (None, 19, 19, 3840); Layer 785: block7c_dwconv, (None, 19, 19, 3840); Layer 786: block7c_bn, (None, 19, 19, 3840); Layer 787: block7-c_activation, (None, 19, 19, 3840); Layer 788: block7c_se_squeeze, (None, 3840); Layer 789: block7c_se_reshape, (None, 1, 1, 3840); Layer 790: block7c_se_reduce, (None, 1, 1, 160); Layer 791: block7c_se_expand, (None, 1, 1, 3840); Layer 792: block7c_se_excite, (None, 19, 19, 3840); Layer 793: block7c_project_conv, (None, 19, 19, 640); Layer 794: block7c_project_bn, (None, 19, 19, 640); Layer 795: block7c_drop, (None, 19, 19, 640); Layer 796: block7-c_add, (None, 19, 19, 640); Layer 797: block7d_expand_conv, (None, 19, 19, 3840); Layer 798: block7-d_expand_bn, (None, 19, 19, 3840); Layer 799: block7-d_expand_activation, (None, 19, 19, 3840); Layer 800: block7d_dwconv, (None, 19, 19, 3840); Layer 801: block7d_bn, (None, 19, 19, 3840); Layer 802: block7-d_activation, (None, 19, 19, 3840); Layer 803: block7d_se_squeeze, (None, 3840); Layer 804: block7d_se_reshape, (None, 1, 1, 3840); Layer 805: block7d_se_reduce, (None, 1, 1, 160); Layer 806: block7d_se_expand, (None, 1, 1, 3840); Layer 807: block7d_se_excite, (None, 19, 19, 3840); Layer 808: block7d_project_conv, (None, 19, 19, 640); Layer 809: block7d_project_bn, (None, 19, 19, 640); Layer 810: block7d_drop, (None, 19, 19, 640); Layer 811: block7-d_add, (None, 19, 19, 640).

The fine-tuning was performed over 10, 30 and 50 epochs, which fitted the top layer of the pretrained convolutional neural network model EfficientNetB7. The fine-tuning step may provide incremental improvements to the accuracy of the model. However, fine-tuning may lead to overfitting. The inventors therefore used a low learning rate. The inventors tested learning rates of 1e-5 and 1e-4, and found 1e-4 provided the best results. Of course, these are simply examples to compare the performance while varying the learning rate and other values for fine tuning could alternatively be used, depending on the circumstances. As with the pretraining step, during fine tuning the model was trained using backpropagation. The model was optimized using the Adam optimizer with binary cross entropy as the loss function.

Once the model was fine-tuned, the classification capability of the model was tested. The classification capability of a convolutional neural network can be described using a variety of metrics. The correlation of individual metrics may play a decisive role in this capability. In particular, the inventors focused on ROC-AUC curves in combination with an evaluation of a gradient-based localization of the classification decision. The inventors tested the above classification capabilities using GradCAM. GradCAM was used during the testing process to evaluate if correct segments (which may be referred to as sections or intended regions or regions of interest) of the test images had been analyzed by the neural network model.

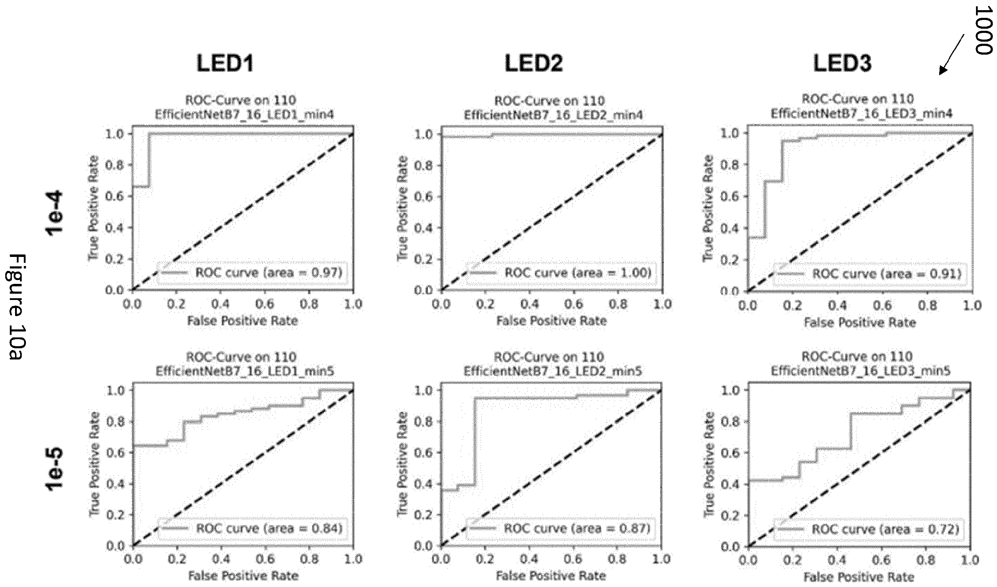

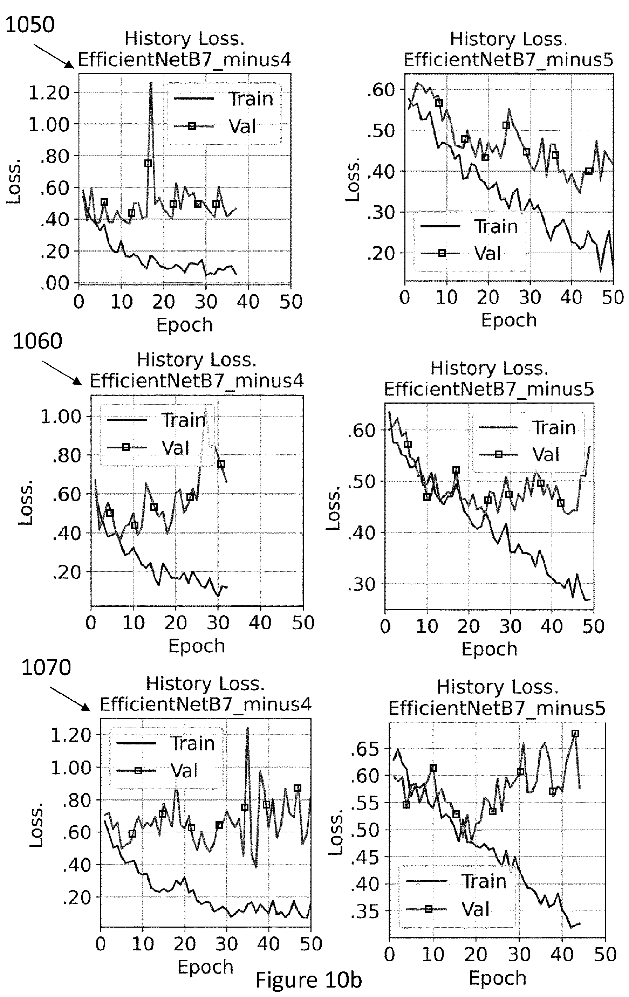

The GradCAM output was computed with respect to the last convolutional layer of the pretrained CNN. The gradient output of the last convolutional layer was captured. Mean intensities of the gradient were computed. The implementation was derived from Keras (Grad-CAM class activation visualization (keras.io)). More details of the GradCAM testing phase are provided in relation to Figures 7, 8 and 9a-9d below. More details of the ROC-AUC curves are provided in relation to Figure 10 below.

During the testing phase, the inventors aimed to reduce the number of epochs and the learning rate until it was observed that the adhesive residues were the focus of decision making.

Too many epochs or too high a learning rate may have a negative impact on the overall model. In such a case, the model runs the risk of being overfitted. In overfitted models, the decision making is focused on properties/areas that are not decisive for the classification of adhesive residues. For example, in the context of adhesive residues on the skin, it could be the general structure of any skin patterns, or the number of black pixels that can randomly correlate with the occurrence of adhesive residues. The inventors found that the best result was achieved with 10 epochs on a final learning rate of 1e-4. That is, basetraining without enabling the last block of the pre-trained layer, but only the customized top-layers, was performed for 100 epochs. Finetuning was then in sequence performed on the basetrained CNN for 10 epochs with a learning rate of 1e-4

**Figure 3b** shows an example 300b of fine-tuning the EfficientnetB7 neural network model 320b for detecting adhesive residue on skin. In this example, the fine-tuning stage may be performed after the pre-training stage described in relation to Figure 2b.

The EfficeintnetB7 NN is an example of the pretrained neural network model 320a described in relation to Figure 3a above. As described above, one or more of the pretrained neural network layers 322b may be set as trainable during a fine-tuning stage. The inventors set block 7 of the EfficientNetB7 neural network as trainable. Of course, the block set as trainable may be dependent on the neural network model used. Generally, the last block, or last layers, before the fully connected layer (or introduced custom top layers) may be set as trainable.

**Figure 4** shows images taken from an example dataset 400 used for training the neural network model. The Figure shows a clean skin image 410 along with a close-up, or enhanced, clean skin image 415 showing a section of the clean skin image. The clean skin image may be classified in a first class, class 0- clean skin. The Figure also shown an adhesive residue image 420 along with a close-up adhesive residue image 425. The adhesive residue image may be classified in a second class, class 1- adhesive residue.

As described above, the training technique used a supervised learning approach. In supervised learning, images that have already been labelled with classes are read and classified by the system(/model). After each classification, the neural network reflects on the decision-making and is optimized until all data is correctly classified.

The inventors found that it was important to look at metrics to understand why a classification was made, as incorrectly correlating effects may be learned. For the labeling of images containing adhesive residues, human specialists were used to visually assess the images and check whether the images contained adhesive (class 1) residues or was free of adhesive residues (class 0).

The dataset was created from a feasibility study and consisted of 357 images, of which 40 images contained adhesive residues. In this process, the adhesive residues appear in different pattern variants. The photos used to train the machine learning model were taken with a "Skinly" device (Tobar, M.D.P.B., Clemann, S., Hagens, R., Pagel-Wolff, S., Hoppe, S., Behm, P., Engelhard, F., Langhals, M., Gallinat, S., Zhavoronkov, A. and Georgievskaya, A., 2024. Skinly: A novel handheld IoT device for validating biophysical skin characteristics. Skin Research and Technology, 30(3), p.e13613). The device connects to a mobile phone and is able to capture skin moisture and close-up images of the skin via three light sources (direct light, polarized light, UV light). The example images in the Figure shown direct light images. Further examples taken in using polarized light and UV light are shown in Figure 8. The narrow cross-section allows measurements to be taken on hard-to-reach areas of the skin. Of course, other suitable devices may be used to image skin.

Predefined areas on human skin were photographed. Plasters were applied to the skin for 24 hours on the defined areas and then removed. As above, before and after the application of plasters, the skin areas were photographed with the Skinly via three lighting variants (direct light, polarized light and UV light).

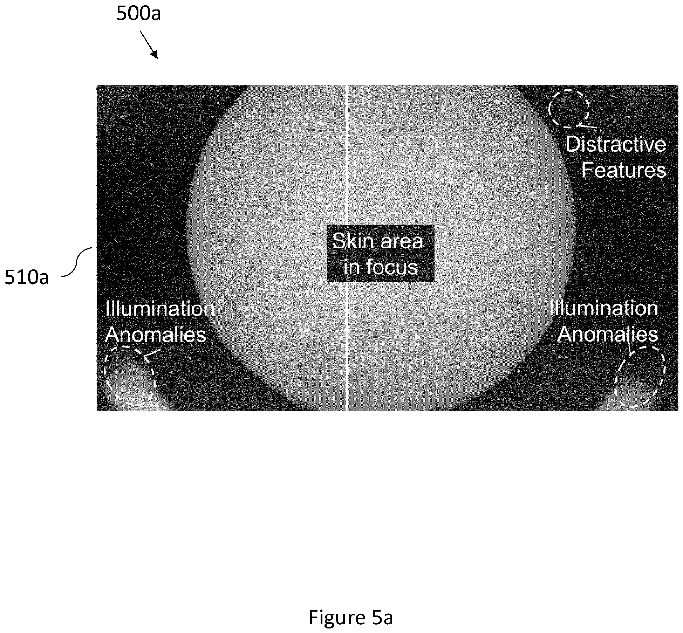

**Figure 5a** shows an example unprocessed image 510a, including (in this case) illumination anomalies and distractive features.

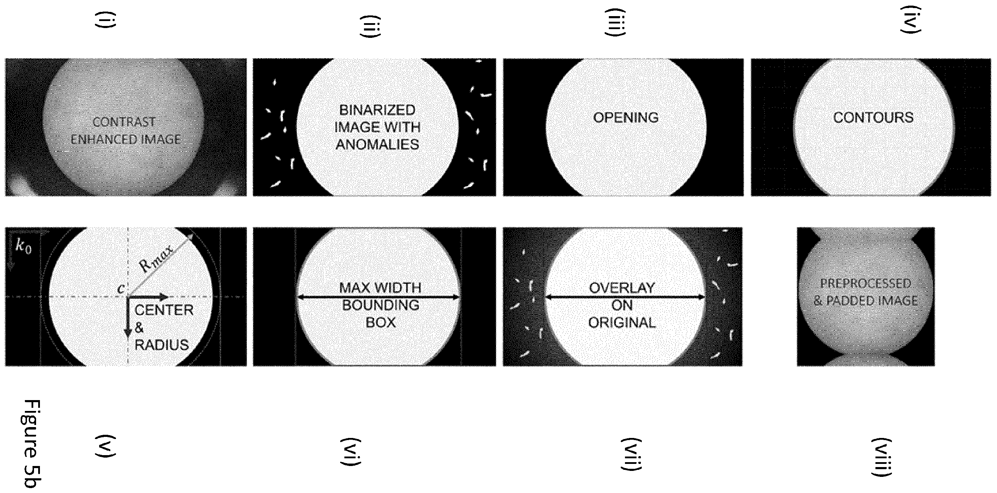

**Figure 5b** shows example steps of pre-processing of training images. 'Raw', unprocessed images such as image 510a shown in Figure 5a, may be taken of the skin, with and/or without adhesive residue. For example, the images may be taken with the skinly device as previously described. The inventors found that the raw images may have illumination anomalies and distractive features. These may be caused by refraction errors and/or damaged lens, etc, when taking the images. The inventors found that if the anomalous images are used for training the neural network model, the NN would erroneously use the anomalies when classifying the images. The inventors therefore preprocessed the images to remove anomalies before training the neural network layers.

In pre-processing, the skin is segmented out of the whole image, resulting in a remaining shell around the skin which is black and matt.

An advantageous new sequence of steps is used to segment the skin, which the inventors have developed through experimentation.

The first step is contrast enhancement. For example, any known method of linear contrast enhancement (or stretching) is used, as shown at image (i), to identify lower and upper bounds from a histogram of values such as minimum and maximum brightness values in the image and to apply a transformation stretch to make the range in the image fill the full possible range. A contrast stretch may be followed by tonal enhancement.

The image is then binarized as shown at (ii), resulting in little anomalies in white and black as shown in the figure, due to the binarization.

Subsequently, as shown at (iii) an opening operation known in the art is used to erode the little anomalies and keep the skin. The binarization and opening are crucial to get clean contours on each image. The noise which occurs in the shell of the skinly device is not necessarily homogeneous on each image. It may be stronger or weaker. The opening operation is performed on top of the contrast enhanced and then binarized image to erode distractions away.

The next step shown at (iv) is to draw contours to separate the images from the background. The process iterates through each image of the training images, tracking the contours to find which area of skin is biggest. Not all images have standardized skin images (i.e. size of skin area) so the inventors used this contour drawing to find the maximum radius of all to have a unified size. The calculated centre for each image individually and maximum radius (for all the images) are shown at (v).

Once the maximum radius has been found, a maximum width bounding box (shown at (vi) is created with this width. That is, a rectangle is formed and padded to create a box shape. The bounding box is overlapped (vii) on each original image and everything within the contour remains in the same the colors whereas everything outwards of the contour is cropped (so becomes black). The image is thus cropped into the specific bounding box shape.

The final image shown at (viii) is the preprocessed and padded image from which all of the features outside the skin area have been removed. The additional pr-processing step of padding and the alternative technique of stretching are described in more detail below and are designed to adapt the image for a particular input format.

The average kind of error removed by this pre-processing is in images which were already pre-damaged ( i,e, the device was not used well).

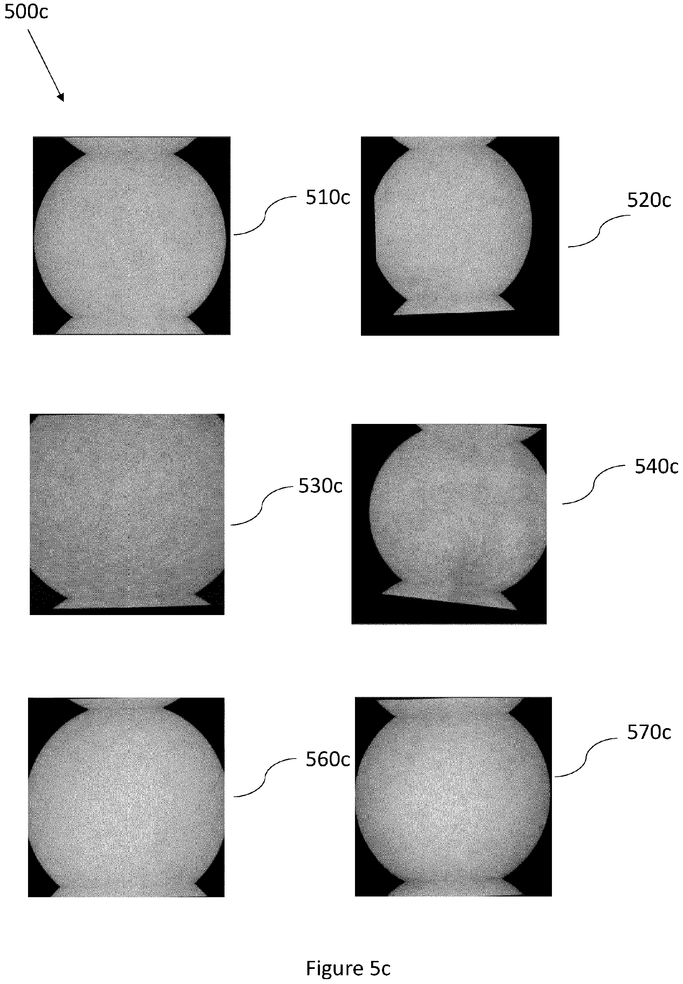

**Figure 5c** shows examples 500c of data extension methods. As described above, to enable efficient use of the convolutional neural network, the training images may be previously pre-processed. Pre-processing may involve extracting significant areas (or sections) of skin and removing image details that are away from the area to be analyzed (e.g., removing the anomalies and distractor features shown in unprocessed image in Figure 5a as per the steps in Figure 5b).

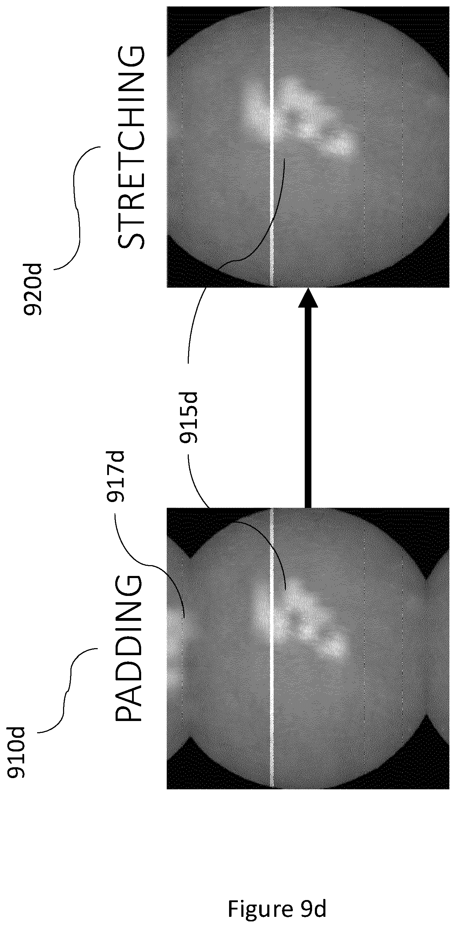

The images may also be pre-processed to a format that corresponds to the format of the original dataset of the network used, as explained later with reference to Figure 9d. That is, if the skin images are taken with a size of 1920x1080 (height x width) (as was the case when using the skinly device), the images may be formatted to have the same dimension as the images used to train the pretrained CNN, which in the case of EfficientnetB7 was 600x600 images.

Furthermore, active data augmentation methods as shown in Figure 5c may additionally or alternatively be used. Data augmentation methods may be used for small datasets. For this purpose, the existing image training set may be modified and transformed at the input stage in order to generate new training samples.

The inventors divided the image processing methods into two areas. These include pixel operations and spatial operations. In pixel operations, convolutional cores are used, which perform mathematical operations on a pixel and its surrounding pixels. Spatial operations, on the other hand, refer to transformations that change the spatial arrangement of pixels. The goal behind data augmentation is to improve the generalization capability of models by training them on an artificially larger and more diverse dataset. This may reduce the risk of overfitting (where a model is trained too specifically on simple patterns in the training data and can therefore react poorly to unknown data).

The first image 510c shows an example of a padded pre-processed image. The further images 520c-570c show examples of the data augmentation methods. In particular, the images show examples of images that are shifted and/or rotated and/or enlarged and/or re-coloured, using data augmentation. The method artificially generates more data, which may improve the generalization capabilities of the machine learning algorithms.

Even if an image appeared unusable for pattern recognition after data processing, the inventors found that the image may still have a beneficial effect on the model's generalization capability. Here, it may be important to adapt the methodology exactly to the use case.

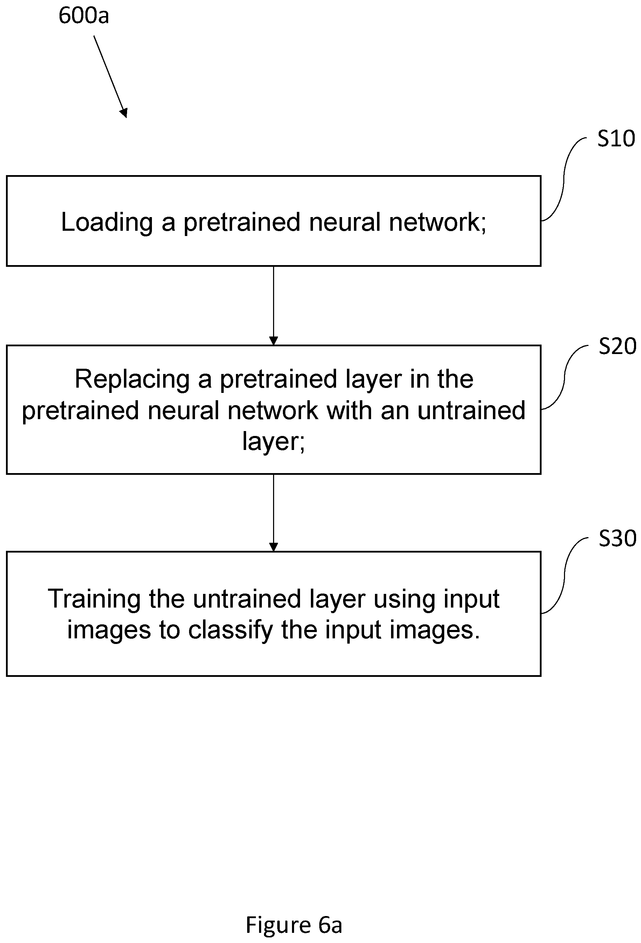

**Figure 6a** shows steps of a method 600a for training a neural network model for detecting adhesive residue on skin. The method may be a computer implemented method of training the neural network model for detecting adhesive residue on skin.

In a loading step s10 a pretrained neural network model may be loaded. The neural network model may be a convolutional neural network model. For example, the CNN may be the CNN described in relation to Figure 1 above. The pretrained model used by the inventors was the EfficientnetB7 convolutional neural network. The EfficientnetB7 CNN uses a scaling method which uniformly scales all dimensions of depth/width/resolution using a compound coefficient. The EfficientnetB7 architecture scales the dimensions using a fixed scaling coefficient.

As above, the pretrained neural network may be a convolutional neural network. The CNN may comprise a convolutional layer, a pooling layer and a fully connected layer. The fully connected layer may be activated with an activation function, for example a SoftMax activation. The pretrained neural network may comprise further layers. For example, the pretrained neural network may comprise RELU activation layers, flattening layers and/or dropout layers. Of course, the CNN may comprise other suitable layers and may have more than one of the same type of layer. That is, the CNN may have more than one convolutional layer, pooling layer, fully connected layer, flattening layer, RELU activation layer and/or flattening layer.

In a replacing step s20 a pretrained layer in the pretrained neural network may be replaced with an untrained layer. The pretrained layer may be a fully connected layer. That is, the pretrained layer may be connected to each output of a previous layer of the neural network. The pretrained layer may be used for classification. For example, the pretrained layer of the EfficientnetB7 CNN was trained to classify input images into one of one thousand classes (or categories). The pretrained layer may be a top layer of the pretrained neural network. That is, the pretrained layer may be an end layer of the stack of layers in the NN.

The untrained layer used by the inventors was a fully connected layer. The fully connected layer was initialized with random weights. The untrained layer may be a 1-unit dense layer (or a single dense neuron). That is, the untrained layer may be used for binary classification of an input image. The untrained layer may replace a pretrained layer in the same layer category. That is, both the untrained layers and the pretrained layer may be fully connected layers.

In a training step S30 the untrained layer may be trained using input images. The untrained layer may be trained to classify the input images. The untrained layer was trained to classify input images into a first class of input images comprising images of skin without an adhesive residue on the skin and a second (or another) class of images comprising images of skin with an adhesive residue on the skin. The input images were pre-labelled images, classified into the above two classes.

The input images were pre-processed before training the untrained layer. For example, the inventors used data augmentation to pre-process the input images. In particular, the image training set was modified and transformed at the input stage in order to generate new training examples.

The input images were processed using pixel operations and spatial operations. The pixel operations used convolutional cores to perform mathematical operations on a pixel and its surrounding pixels. The spatial operations transform the spatial arrangement of pixels. As shown in Figure 5b, the training images were rotated and shifted using the data augmentation techniques. The method artificially generates more data, which may improve the generalization capabilities of the machine learning algorithms.

The untrained layer was trained by inputting each image of the input images into the pretrained neural network, generating a representation of the input image from a last layer of the pretrained neural network, inputting the representation of the input image into the untrained layer to generate a predicted class of the input image, comparing the predicted class of the input image with the class of the input image, optimizing a loss between the predicted class and the class of the image and updating the weights of the untrained layer according to the optimized loss. The loss may be optimized by minimizing the loss, or loss function, between the predicted class and the class of the image.

The last layer of the EfficeinetB7 neural network was an activation layer. In particular, the last layer was Sub-layer 814: top_activation, (None, 19, 19, 2560). Of course, the last layer may comprise any suitable layer. For example, the last layer may be a convolutional layer, a pooling layer, an activation layer, or a flattening layer.

The inventors removed further layers of the pretrained neural network and replaced these with a further untrained layer. The further layers removed from the pretrained neural network were a pooling layer and a dropout layer. The further untrained layer introduced by the inventors was a global average pooling layer. The further untrained layer was not a fully connected layer.

The global average pooling layer may take an input from the last remaining layer of the pretrained neural network to generate the representation. In particular, the global average pooling layer used by the inventors was a global average pooling 2D layer configured to average the output of the last layer of the pretrained neural network to generate the representation.

The output of the last layer of the pretrained neural network was a feature map. Hence, the global average pooling layer was configured to compute the average of each feature map output by the last layer. Furthermore, the pooling layer may reduce the multidimensional output of the last layer.

The inventors found that the detection of adhesive residues on the skin using a neural network (i.e. machine learning) may prevent unwanted loss of adhesive quality by detecting adhesive residues on the skin after the plaster application. As above, in particular the inventors used convolutional networks for this purpose, which analyse images for patterns and then classify them according to the patterns.

Compared to the previously used MedTest approaches, (an example of the type of testing procedure is provided at, https://multimedia.3m.com/mws/media/876307O/skin-vs-stainless-steel-adhesion-testing-for-medical-design.pdf), the advantage of the presented method is that such a network may be trained from scratch in order to avoid bias-based decisions, as can occur with human reviewers. For this purpose, new data can simply be added to the existing dataset in order to carry out such training. A growing dataset may also translate into a better, more effective, classification capability of the network. Learning may occur quickly as the system analyses all the data across multiple learning epochs and learns pattern recognition based on the specific data set.

Furthermore, the inventors found that the neural network model may perform a very fast analysis of a large number of close-up images on which adhesive residues are present. For example, such a network can view and assess 120 images within 9 seconds, whereas a human reviewer needs more time. The appearance of adhesive residues on the skin can vary greatly in their occurrence. Thus, the inventors developed a method which may be controlled, and which may regularly re-learn the appearance and occurrence of adhesive residues.

The inventors surprisingly found that through fine-tuning and data expansion, the last convolution core was able to detect significant adhesive segments. This is not common as the dataset used to train the model was very small, which is generally not advantageous for convolutional neural networks. The output of a GradCAM shows image segments that led to the classification.

The aim of the GradCAM is to enable a better traceability of decision-making. In the system presented, this was achieved on adhesive residues. The observation of a research assistant to understand their decision-making ability is comparatively difficult to document. Based on the evaluations of GradCAM's outputs, the classification capability of the system can also be controlled by parameter adjustment through improved traceability of the decision.

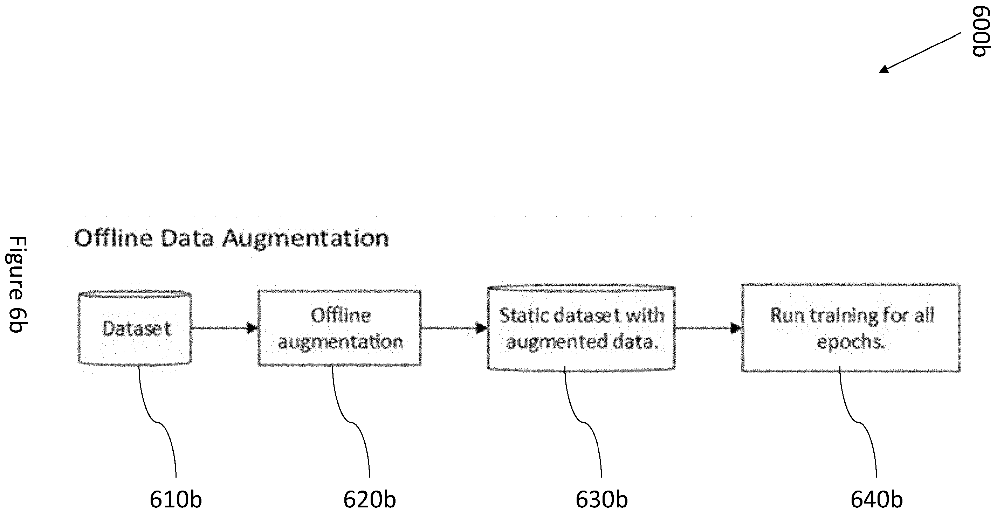

**Figure 6b** shows a method 600b for training a neural network model using an augmented dataset. As described in relation to Figure 4, a dataset 510b (which may be referred to as an original dataset) for training the neural network model may comprise labelled images of clean skin (i.e., no adhesive) and images of skin with adhesive. The training method described in relation to Figure 6b may be used in the methods described in Figures 2a-3b and Figure 6a above.

In an offline data augmentation step 620b, the dataset 610b may be pre-processed and augmented as described in relation to Figures 5a-5c above. The dataset may be augmented to create a static dataset with augmented data 530b (e.g., with augmented padded and/or stretched images). The static dataset may contain all the images in the (original) dataset and the augmented images or may contain only the augmented images. Each image in the original dataset may be used to generate a corresponding augmented image. The step is referred to as an "offline" step in the sense that it may occur before the NN is trained. However, processing and/or augmentation may of course occur "online" in the sense that the dataset may be stored in an external server and may be transferred to another server through a networked connection for processing.

The generated augmented images may retain the label of the image used for the augmentation. That is, if an original image in the original dataset is labelled as "no adhesive", the augmented images generated from that image may also be labelled as "no adhesive". This step may be referred to as an offline step as the dataset may be pre-processed and augmented before training the neural network model. Once the dataset is augmented to generate the static dataset, further processing of the dataset may not be required or performed.

Once the static dataset with augmented data has been generated, the neural network model may be trained using the static dataset. The neural network model may be trained using the methods described in relation to Figures 2a-3b and Figure 6a. In this example, a Run training for all epochs step 640b, may comprise inputting all images in the static dataset (and their corresponding label) once per epoch and training the neural network model. The training may be repeated a number of epochs, for example, as described above a pre-training step may comprise 100 epochs and a fine-tuning step may comprise 10 epochs. Preprocessing and augmenting the original dataset to generate a static dataset may require little computational power for generating the training set, with no extra pre-processing as the images are fed into the NN. Further, training of the NN with a static dataset is repeatable, with the same trained weighted model expected if the NN is retrained from the same training set.

The method described in relation to Figure 6b may be used during the pre-training step, as described in relation to Figures 2a and 2b, and/or during the fine-tuning step as described in relation to Figures 3a and 3b.

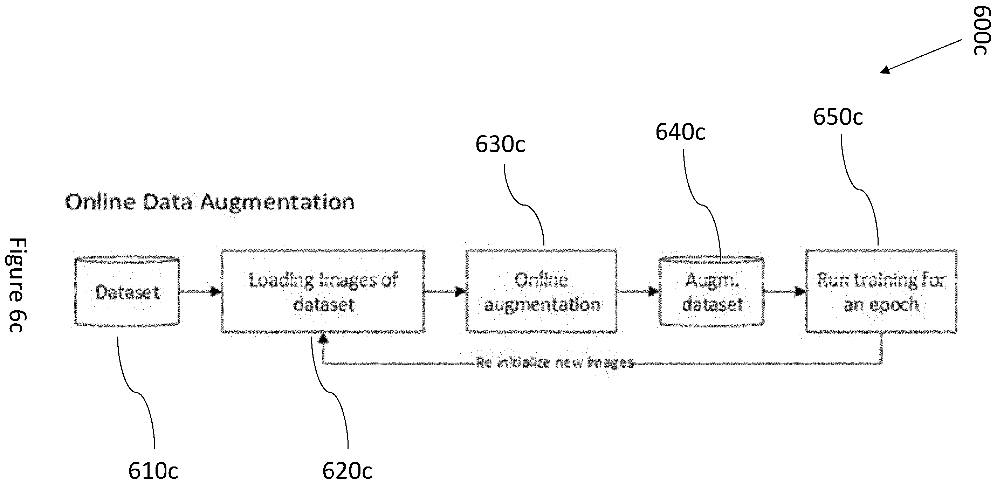

**Figure 6c** shows another method 600c for training a neural network model using an augmented dataset. As described in relation to Figure 4, the dataset 510c (which may be referred to as an original dataset) for training the neural network model may comprise labelled images of clean skin (i.e., no adhesive) and images of skin with adhesive. The training method described in relation to Figure 6c may be used in the methods described in Figures 2a-3b and Figure 6a above.

In a loading images of dataset step 620c, a dataset 610c may be loaded. The dataset may be pre-processed images, as described in relation to Figures 5a-5c. The pre-processed images in the dataset may not be augmented. Alternatively, the images in the dataset may be unprocessed images and may then be pre-processed during, for example, the loading step.

In an online augmentation step 630c the dataset may be augmented. For example, the dataset may be augmented as described in relation to Figures 5a-5c above. That is, for example by pixel and/or spatial operations on the images. The augmented images may form an augmented dataset 640c.

The augmented dataset may be input into the neural network model for training. In a Run training for an epoch step 650c the augmented dataset may be used for one epoch for training the neural network. Once the epoch is completed the process may restart at the loading step 620c. That is, for each epoch, a new augmented dataset may be generated and used to train the model. Alternatively, the same augmented dataset may be used for one or more epochs. That is, in an example, the dataset may not be re-initialized every epoch but may be used for one, or two or more epochs and then re-initialized.

The method described in relation to Figure 6c may be used during the pre-training step, as described in relation to Figures 2a and 2b, and/or during the fine-tuning step as described in relation to Figures 3a and 3b. Further, the methods 6b and 6c may be combined. For example, a static dataset may be used during pre-training step and the online method may be used during the fine-tuning step. The opposite is also true.

Thus, the input images may be augmented to generate new augmented input images for each training epoch of the neural network. The inventors found that augmenting the dataset before each epoch improved the classification ability of the neural network model, as compared with the static dataset.

**Figure 7** shows images 700 for verifying the classification capability of a neural network model. Once the untrained (customizable) top layer of the neural network model was trained and the model was fine-tuned, the inventors verified the capabilities of the model.

The final verification of the model was performed using a gradient-based localization of the classification decision. For this purpose, several images were examined to determine whether adhesive residues had been used as the focus of decision making. That is, the ability of the neural network model to identify intended regions in the input image for classification was determined. To analyze the effectiveness of the model in selecting appropriate regions of the image for decision making, the inventors used the GradCAM architecture.

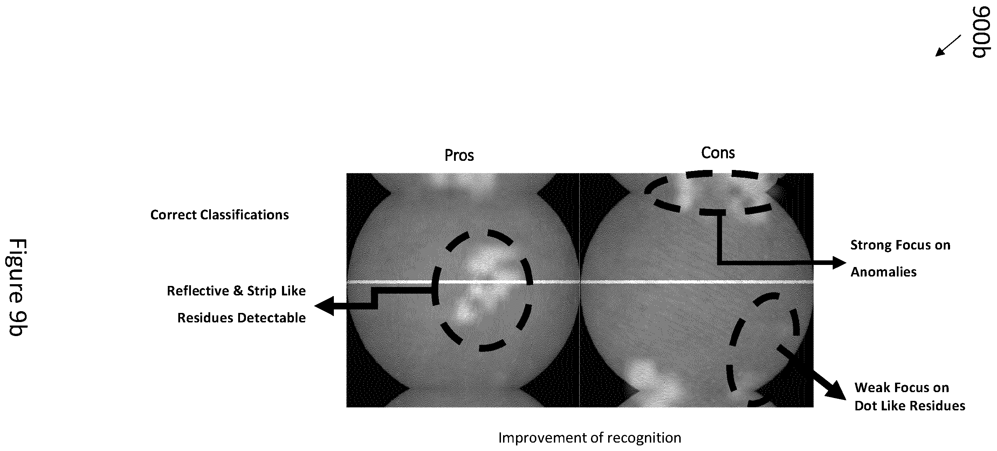

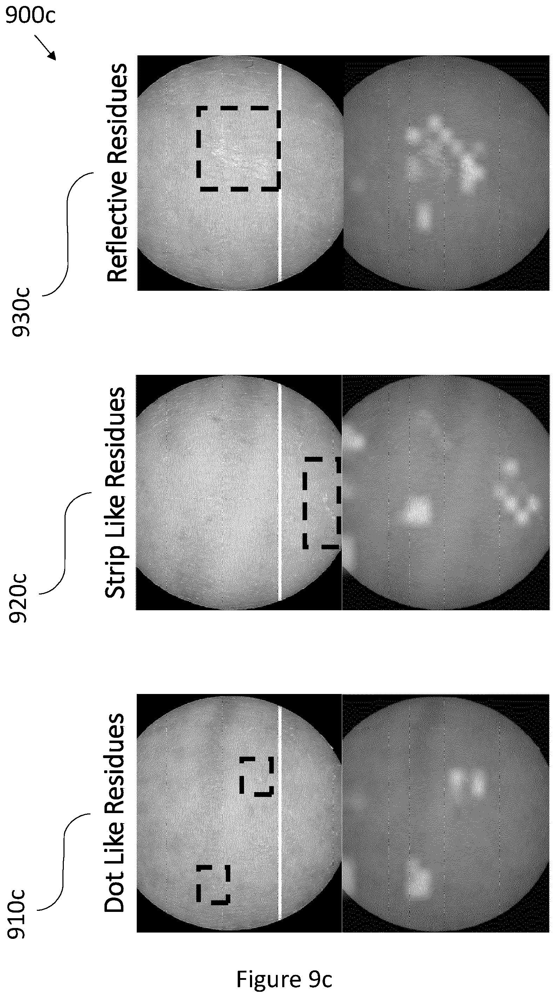

Figure 7 shows an input image 710 and a thermal imaging map 720 generated by GradCAM. The reflective part 715 in the middle of the image is characteristic of the occurrence of adhesive residues. The same goes for the stripes 717 on the lower right edge. In this example, there were anomalies on upper side of the image which were detected as contributing to the classification decision of the neural network. In this example with the padded image, the thermal image shows that the boundary between the padding was incorrectly used in the classification decision of the NN. This indicates that the model may require further fine-tuning to improve performance. The inventors found that stretching the images rather than padding them during the pre-processing step may improve classification performance and reduce anomalous detections, as described in relation to Figures 9b and 9c below.

**Figure 8** shows another example of images 800 for verifying the classification capability of the neural network model. As in Figure 7 above, Figure 8 includes an input image 810 and a thermal imaging map 820 generated by GradCAM. As shown in the Figure, Grad-CAM effectively detected streak-like adhesive residues, at the top left and right of the image, as well as at the bottom of the image. Hence, the thermal plots show the effectiveness of the model for classifying input images.

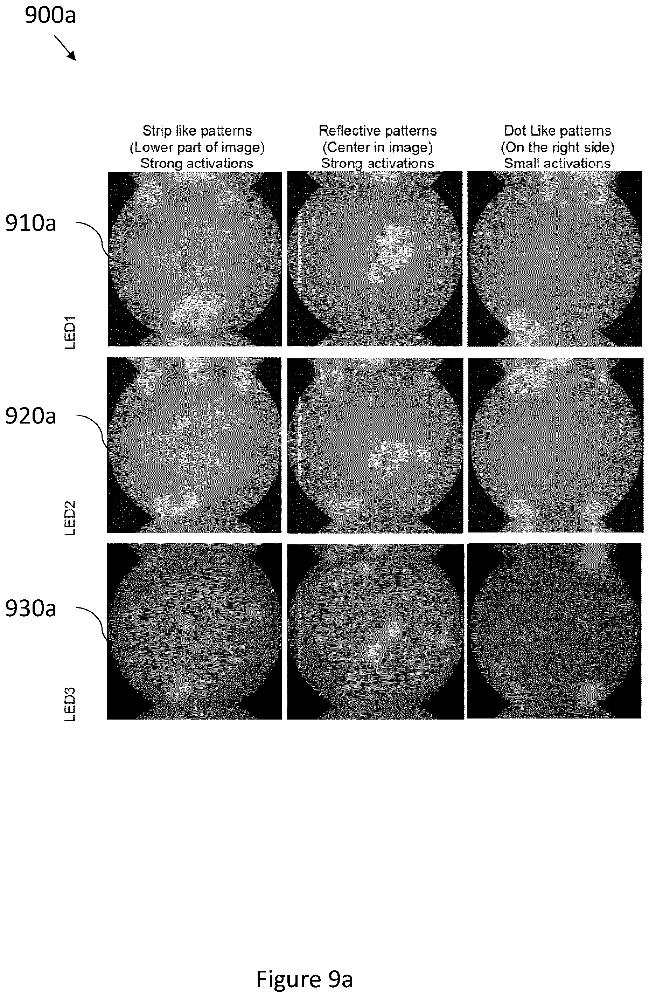

**Figure 9a** provides further example images 900a for verifying the classification capability of the neural network model.

As described above, the inventors found the model performed most effectively when fine-tuned with 10 epochs with a learning rate of 1e-4. To determine the effectiveness of the model, the neural network was evaluated with GradCAM plots, sensitivity, learning curves and ROC-Curves.

During the training phase, three datasets were tested independently from each other. Each dataset was aligned to an LED of the Skinly device. The Skinly is capable of creating close images from the skin under the variation of three illumination techniques:

LED1 - direct illumination illuminates the skin with LEDs.
LED2 - cross polarized illumination filters out reflections on the skin surface.
LED3 - UV-light excites fluorescence on the skin.

The GradCAM output was computed with respect to the last convolutional layer of the CNN. The gradient output of the last convolutional layer was captured and mean intensities of the gradient were computed. The inventors tested 10 epochs, 30 epoch and 50 epochs and found 10 epochs to be most effective.

The GradCAM output was tested on three example images which contained different adhesive residue patterns. Strip like and reflective adhesive residues were detected to a satisfactory standard, while dot like residues were not satisfactorily detected. Dot like adhesive residues may be linked to effects of plaster application but might not directly be adhesive residues. The inventors therefore adjusted the learning rates of the fine-tuning to determine which learning rate performed most effectively.

The first row of images 910a in Figure 9a were taken with LED 1 (direct illumination of the skin with LEDs). The first image (top left) shows a strip-like pattern on the skin. The GradCAM heatmap map shows the result for the model fine-tuned with 10 epochs with a learning rate of 1 e-4 (but of course the number of epochs and learning rate may be parameters which are varied and optimized depending on the dataset. The heatmap shows strong activations for the strip-like patterns, showing that the neural network effectively selects the correct regions (or areas) of the image when classifying the image.

The second image (top middle) shows strong activations for reflective patterns in the image, reflective patterns being indicative of adhesive residue. Again, the GradCAM shows strong activations for regions with reflective patterns.

The third image (top right) shows a weak, or small, activation for dot like patterns in the test image. The inventors identified that the model was not effectively identifying dot-like patterns when classifying the images. Thus, by evaluating the test models with GradCAM the inventors were able to identify that the training parameters required adjusting. As above, the inventors found that the model performed most effectively when fine-tuned with 10 Epochs with a learning rate of 1e-4.

The second row of images 920a in the figure were taken with LED2 (cross polarized illumination) and show similar patterns to LED1 with strong activations for strip-like and reflective patterns and weak activations for dot like-patterns.

The third row of image 930a were taken with LED 3 (UV-light) and again show similar patterns to the first and second rows.

During the evaluation, the learning rates of 1e-4, 1e-5 and 1e-6 were tested. 1e-6 did not detect adhesive residues at all. The learning rate 1e-5 performed more effectively and achieved good results after 30 epochs. 1e-4 classified most of the three example images correctly, while also detecting the residues.

The sensitivity (which may also be referred to as recall) showed good results for each dataset with a learning rate of 1e-4 (92 %, 85 %, 92 % for LED1, LED2 and LED3 respectively. On a learning rate of 1e-5 the results were (92 %, 100 %, 85 %).

The output of the learning curves showed when overfitting occurred and if a steady loss reduction could be achieved on various learning rates. During this test, learning rates of 1e-5 and 1e-4 for each dataset were compared with each other. The outcome showed that overfitting occurred earlier on the higher learning rate of 1e-4, see Figure 10b.

The inventors also used receiver operating characteristic - area under curve (ROC AUC) curves to evaluate the neural network model. Details of the ROC AUC curves are provided in relation to Figure 10a below.

**Figure 9b** shows an example analysis 900b of a padding pre-processing/data augmentation technique, in which the image is supplemented with values outside the actual data in the image. Here the padding is added at the top and bottom of the image, for example by mirroring a few lines of data from the top and from the bottom along the border. Other padding techniques may be used, such as adding zeros (black pixels). As shown in the Figure, with the padded augmented images, the neural network was able to effectively detect reflective and strip like residues on the skin. Further, as described in relation to Figures 5a and 5b, a padded image may improve the classification ability of the neural network over a non-augmented dataset.

The inventors also identified that when trained on the padded images, the neural network may incorrectly recognize anomalous regions when classifying the images and/or may not effectively recognize dot-like regions. The inventors therefore developed another data-augmentation technique, namely stretching the images, as shown in relation to Figure 9c below.

**Figure 9c** shows an example analysis 900c of a stretching pre-processing/data augmentation technique. As described in relation to Figures 5a and 5c, a raw, unprocessed image taken using the skinly device may be pre-processed and stretched. Figure 9c shows analysis for three sets of images, a dot like residues set 910c, a strip like residue set 920c, and reflective residue set 910c. The dashed boxes in the image mark the respective type of residue found in the image.

The inventors found that the effectiveness of the neural network for classifying the images was improved (compared to unprocessed and padded images) when using the stretched images. That is, with the stretched images, fewer, if any, anomalies influenced the neural network when classifying the images. Further, the ability of the model to recognize adhesive residue features was improved. For example, dot like residues were more effectively recognized using the stretching technique compared with the padding technique.

In either case, padded or stretched, the inventors found that pre-processing the images before training the neural network model improved the ability of the model to classify the images into images with adhesive on the skin and images without adhesive on the skin.

**Figure 9d** shows a comparison between two pre-processing images. The Figure shows thermal (heat) images produced by GradCAM. The same unprocessed image was pre-processed with padding in the padded image 910d and stretching in the stretched image 920d.

As shown in both images, the adhesive residue 915d was correctly identified by the neural network model when making the classification. However, in the padded image, the NN erroneously identified a region as having adhesive residue. The inventors therefore found the neural network model may be improved using stretched images.

The inventors additionally found that the neural network classification ability may depend on the labelling quality of the training images. When labelling training images of skin with adhesive, a judgement must be made as to whether the image contains adhesive. The judgement may be made by a human, for example a lab technician, and may therefore be subject to interpretation and/or bias. The inventors found that taking a more conservative approach with labelling, that is only labelling images as containing adhesive if there was a high certainty by the labeler, may improve the NN model's ability to classify images.

**Figure 10a** shows receiver operating characteristic curves 1000 for evaluating the performance of a neural network model.

The receiver operating characteristic (ROC) curve describes the performance of a classification model in the incremental variation of thresholds at which a decision neuron may be activated. By adjusting a CNN's discrimination threshold, the network may be tuned to achieve either higher sensitivity or greater precision in classification. This approach makes it possible to fine-tune the CNN to make it either more sensitive or more accurate for certain classification tasks, depending on whether the priority is to capture as many relevant cases as possible (sensitivity) or to minimize the number of false positives (precision).

The ROC curves shown in the Figure were created with automatic threshold variation. The curves were evaluated for each dataset on the learning rates of 1e-4 and 1e-5. As described above the decision neuron was a 1-neuron dense layer (fully connected).

The plots in the Figure were created for the fine-tuned EfficientNetB7 CNN. The 100 epochs of the pre-training stage and 10 epochs of the fine-tuning stage were summed. The ROC curves show high probabilities that the model will make a classification that is not random, if the thresholds vary.

Along with the ROC curve, the Figure shows Area under curve values (AUC, denoted as "area" in the plots). The AUC is a metric score which evaluates the performance of the network. Values from 0.8 indicate an effective CNN model.

The first row of plots in the Figure show ROC curves for a learning rate of 1e-4 for the neural network trained using images taken with LED1, LED2 and LED3 respectively. The second row of plots show ROC curves for a learning rate of 1e-5 for the neural network trained using images taken with LED1, LED2 and LED3.

ROC AUC curves lead to the conclusion on which learning rate was more suitable for classifying the images. As shown in the Figure the AUC score for each dataset was higher with a learning rate of 1e-4. Thus, the inventors selected the learning rate of 1e-4 to train the model.

**Figure 10b** shows learning curves for evaluating the behavior of a neural network model. Learning curves can be used to examine the behaviour of a neural network. If a learning curve of the training and validation dataset separates, it may be determined that the threshold for "overfitting" has been reached. In this case, the neural network may adapt too closely to the training data set.

The first row 1050 of graphs in Figure 10b show learning curves for a neural network model trained on images taken with LED1 (direct illumination). The graph on the left shows a learning rate of 1e-4 (minus4) and the right graph shows a learning rate of 1e-5. Similarly, the second row 1060 shows learning curves for LED2 (cross polarized illumination), and the third row 1070 shows learning curves for LED3.

The inventors found that when the learning rate was decreased to 1e-6, the graphs did not show convergence. Hence 1e-6 learning rate curves are not shown.

As shown in the Figure, overfitting occurred earlier on the higher learning rate of 1e-4, as the training and validation curves diverge with fewer epochs than the 1e-5 rate. However, as described above, the inventors found that the neural network model performed most effectively with 10 epochs and a learning rate of 1e-4.

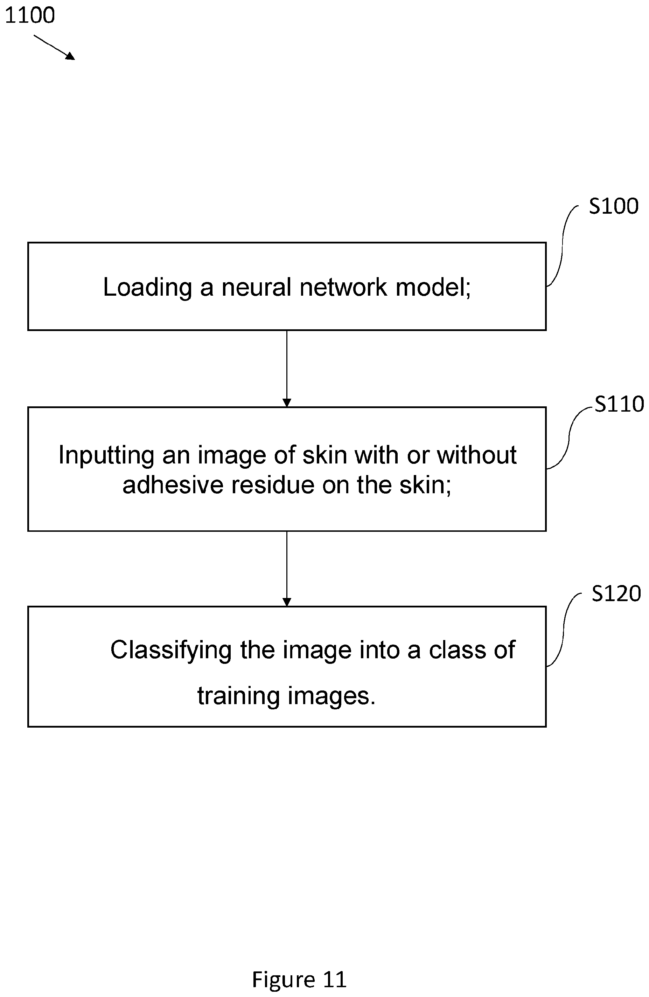

**Figure 11** shows an example implementation method of the neural network model.

In a first step s100 a neural network model may be loaded. The neural network model may be the neural network model described above. That is, the neural network model may use a an Efficientnet CNN as a base model and may comprise a layer, for example a fully connected layer, trained for classifying images of skin with and without adhesive.

During training of the neural network model, a pretrained layer of the neural network may be replaced with an untrained layer. The untrained layer may then be trained, using training images, to classify the training images, a class of the training images may comprise an image of skin without an adhesive residue on the skin and another class of the training images comprising an image of skin with an adhesive residue on the skin. That is, the dataset used to train the untrained layer may be the dataset described in connection to Figure 4 above. The replaced pretrained layer may be a fully connected layer. That is, the untrained layer and pretrained layer may both be the same type of layer (i.e. fully connected layers used for classification).

In an inputting step s110, an image of skin with or without adhesive residue on the skin may be input. The image may be taken with an imaging device, such as the skinly device. The image may be an image of skin under direct illumination of visible light or may be an image of skin taken with a polarizing filter or under UV illumination.

The image may be input by a user. The user may interact with, for example, a user interface to input the image. Additionally or alternatively, the image may be automatically input. For example, a device taking the image of the skin may automatically input the image into the neural network model.

In a classifying step s130, the image may be classified into a class of the training images. That is, the image may be classified into a first class of images of skin without adhesive on the skin or a second class of images of skin with adhesive on the skin. The method may classify the image by predicting a class in which the image falls into. That class may be predicted by a fully connected layer of the neural network model. The final predicted class may be determined by inputting the output of the fully connected layer into an activation function (such as a SoftMax function). As described in relation to Figures 2, 3 and 6 above, the predicted class may be predicted by training the untrained layer using the training images.

The classification of the image may be output. For example, the classification may be output on a graphical user interface. The classification may be output to a user. The classification may be output along with a representation of the image showing regions in the image used for the classification. For example, the classification of the image may be output along with a heatmap showing regions of the image used for the classification. The heatmap may be generated using a gradient based method such as GradCAM described above.

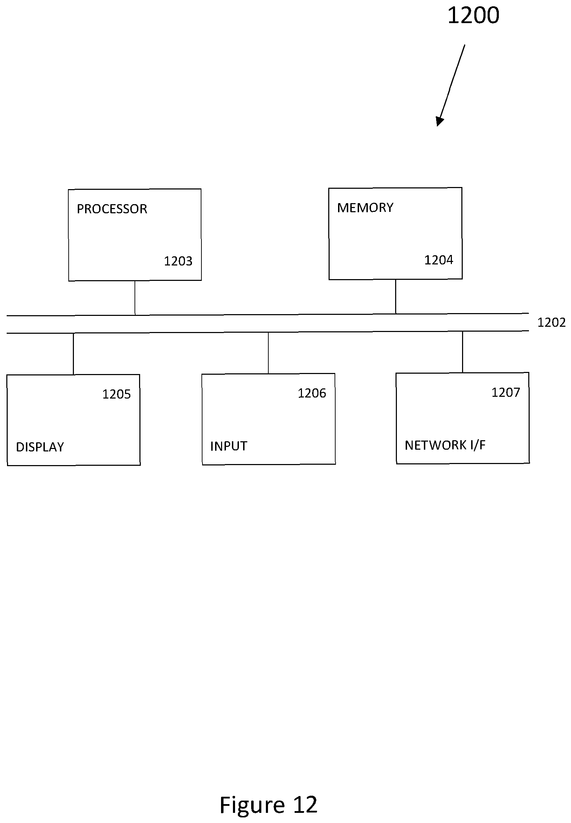

**Figure 12** is a block diagram of an information processing apparatus 1200 or a computing device 1200, such as a data storage server, which embodies the present invention, and which may be used to implement some or all of the operations of a method embodying the present invention, and perform some or all of the tasks of apparatus of an embodiment. The computing device 1200 may be used to implement any of the method steps described above, e.g. any of steps S10-S30 and/or S100-S120 for example.

The computing device 1200 comprises a processor 1203 and memory 1204. Optionally, the computing device also includes a network interface 1207 for communication with other such computing devices, for example with other computing devices of invention embodiments. Optionally, the computing device also includes one or more input mechanisms such as keyboard and mouse 1206, and a display unit such as one or more monitors 1205. These elements may facilitate user interaction. The components are connectable to one another via a bus 1202.

The memory 1204 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, for example any of steps S10-S30 and/or S110-S120. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 1203 is configured to control the computing device and execute processing operations, for example executing computer program code stored in the memory 1204 to implement any of the method steps described herein. The memory 1204 stores data being read and written by the processor 1203 and may store a pretrained neural network, weights of a neural network, at least one layer of a neural network and/or any schema described above, and/or programs for executing any of the method steps described above. These entities may be in the form of code blocks which are called when required and executed in a processor.

As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 1203 may be considered to comprise any of the units, or modules, described above. Any operations described as being implemented by a unit may be implemented as a method by a computer and e.g. by the processor 1203.

The training of the neural network model was conducted with Microsoft Machine Learning Studio, by using a virtual machine (Standard_NC6s_v3 (6 cores, 112 GB RAM, 336 GB disk, with NVIDIA Tesla V100, 16 GB VRAM). Of course, any suitable hardware may be used to train and implement the model.

The display unit 1205 may display a representation of data stored and/or generated by the computing device, such as a classification of an input image or heatmap of an input image. The output may be shown as GUI windows and/or interactive representations enabling a user to interact with the apparatus 1200 by e.g.

selection interaction, input text boxes, and/or any other output described above, and may also display a cursor and dialog boxes and screens enabling interaction between a user and the programs and data stored on the computing device. The input mechanisms 1206 may enable a user to input data and instructions to the computing device, such as enabling a user to input any user input described above. For example, the display unit may display a GUI including a User panel, or input space, for the user to interact. The user may input an image. The user may interact with the GUI and display to generate and view a classification of the input image.

The network interface (network I/F) 1207 may be connected to a network, such as the Internet, and is connectable to other such computing devices via the network. The network I/F 1207 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 1200 such as that illustrated in Figure 12. Such a computing device need not have every component illustrated in Figure 12 and may be composed of a subset of those components. For example, the apparatus 1200 may comprise the processor 1203 and the memory 1204 connected to the processor 1203. Or the apparatus 1200 may comprise the processor 1203, the memory 1204 connected to the processor 1203, and the display 1205. For example, the functions and/or architecture described in relation to Figures 2a to 3b may be stored in the memory and/or the method described in relation to Figures 6a, 6b and/or 6c, and/or Figure 11 may be stored in the memory. The processor may be configured to perform the method stored in the memory using, for example, the functions and/or architecture stored in the memory. A method embodying the present invention may be carried out by a single computing device in communication with one or more data storage servers via a network. The computing device may be a data storage itself storing at least a portion of the data. The functions and/or architecture and/or method may be stored in on the one or more data storage servers and the processor in the computing device may be configured to carry out the method steps.

A method embodying the present invention may be carried out by a plurality of computing devices operating in cooperation with one another. One or more of the plurality of computing devices may be a data storage server storing at least a portion of the data. For example, the pretrained neural network may be stored on a separate server from other units or modules.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

The system described herein was developed in the python programming language using the following libraries: numpy and pandas: for data manipulation, storage, and handling; OpenCV and PIL: for any image operation such as image processing, reading, and saving; Tensorflow and Keras: for any machine learning related task, such as the initialization of a model, training, or the preprocessing of data; SciPy and scikit-learn: for the conduction of statistical operations which have been applied in machine-learning and the evaluation of the metrics; Albumentations: For the implementation of DA during machine-learning. The EfficientNetB7 pretrained CNN was implemented using Tensorflow Keras with the command: from tensorflow.keras.applications import EfficientNetB7. The top layers of EfficientNetB7 were removed, as seen in the "include_top = False" command: base_model = EfficientNetB7(weights='imagenet', include_top=False, input_shape=(im g_height, img_width, 3)). Of course, any suitable programming language and libraries may be used.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

**Claims**

1. A computer implemented method of training a neural network model for detecting adhesive residue on skin comprising,

   loading a pretrained neural network;
   replacing a pretrained layer in the pretrained neural network with an untrained layer;
   training the untrained layer using input images to classify the input images;
   wherein a class of the input images comprises an image of skin without an adhesive residue on the skin and wherein another class of the input images comprises an image of skin with an adhesive residue on the skin.

2. The method according to any preceding claim, wherein the untrained layer is trained using each image in the input images by:

   inputting an image of the input images into the pretrained neural network;
   generating a representation of the input image from a last layer of the pretrained neural network;
   inputting the representation of the input image into the untrained layer to generate a predicted class of the input image;
   comparing the predicted class of the input image with the class of the input image;
   optimizing a loss between the predicted class and the class of the image; and updating a weight of the untrained layer according to the optimized loss, preferably wherein the last layer of the pretrained neural network is a convolutional layer, a pooling layer, an activation layer or a flattening layer.

3. The method according to claim 2, wherein the representation of the input image is generated by inputting an output of the last layer of the pretrained neural network into a further untrained layer, preferably wherein the output is a feature map.

4. The method according to any preceding claim, wherein the untrained layer is a fully connected layer, preferably wherein the fully connected layer is a one-unit dense layer for binary classification of the input images into a class of the input images.

5. The method according to any of claims 4 to 6, wherein the further untrained layer is not a fully connected layer, and preferably wherein the further untrained layer is a pooling layer, more preferably wherein the pooling layer is a global average pooling 2D layer configured to average the output of the last layer of the pretrained neural network to generate the representation.

6. The method according to any preceding claim, wherein the pretrained layer is a fully connected layer, preferably wherein the fully connected layer is used for classification, and/or wherein further layers in the pretrained neural network are replaced, preferably wherein the further layers comprise a pooling layer and a dropout layer.

7. The method according to any preceding claim, wherein once the untrained layer is trained, the neural network is further trained using each image in the input images by:

inputting an image of the input images into the neural network; and
adjusting a weight of a remaining layer of the pretrained neural network and the weight of the untrained layer during a backpropagation to fine-tune the weight of the remaining layer and the weight of the untrained layer.

8. The method according to any preceding claim, wherein the input images are pre-processed and/or augmented, preferably wherein the preprocessing comprises padding and/or stretching the image, and the augmentation comprising pixel operations and/or spatial operations on the pre-processed images.

9. The method according to claim 8, wherein the pre-processing comprises consecutive steps of optional contrast enhancement, followed by binarization, opening, contouring and use of a bounding box constructed from the contouring, to remove the background of the skin image.

10. The method according to claim 8 or 9, wherein the input images are augmented to generate new augmented input images for one or more training epochs of the neural network, preferably wherein the input images are augmented between epochs during the training of the neural network model.

11. The method according to any preceding claim, wherein an ability of the neural network model to identify intended regions in the input image for classification is determined using a mean intensity of a gradient of a last convolutional layer of the neural network model, the intended regions being regions of the input images with skin and/or skin with adhesive residue.

12. The method according to any preceding claim wherein the input images are classified into three categories, a first category comprising images taken under direct illumination by a light source, a second category comprising images taken with a cross polarized filter applied and a third category comprising images taken under illumination of an ultraviolet light source.

13. A computer program which, when run on a computer, causes the computer to carry out a method of training a neural network model for detecting adhesive residue on skin comprising:

loading a pretrained neural network;
replacing a pretrained layer in the pretrained neural network with an untrained layer;
training the untrained layer using input images to classify the input images;
wherein a class of the input images comprises an image of skin without an adhesive residue on the skin and wherein another class of the input images comprises an image of skin with an adhesive residue on the skin.

14. An information processing apparatus configured to train a neural network model for detecting adhesive residue on skin comprising a memory and a processor connected to the memory, wherein the processor is configured to:

load a pretrained neural network;
replace a pretrained layer in the pretrained neural network with an untrained layer;
train the untrained layer using input images to classify the input images;
wherein a class of the input images comprises an image of skin without an adhesive residue on the skin and wherein another class of the input images comprises an image of skin with an adhesive residue on the skin.

15. A computer implemented method for detecting adhesive residue on skin using a neural network model comprising;

training the neural network model according to any of claims 1-12;
loading the neural network model;
inputting an image of skin with or without adhesive residue on the skin;
classifying the image into a class of the training images.

**Patentansprüche**

1. Computerimplementiertes Verfahren zum Trainieren eines neuronalen Netzwerkmodells zum Nachweisen von Klebstoffrückstand auf Haut, umfassend

Laden eines vortrainierten neuronalen Netzwerks;
Ersetzen einer vortrainierten Schicht in dem vortrainierten neuronalen Netzwerk durch eine untrainierte Schicht; Trainieren der untrainierten Schicht unter Verwendung von Eingabebildern, um die Eingabebilder zu klassifizieren;
wobei eine Klasse der Eingabebilder ein Bild von Haut ohne einen Klebstoffrückstand auf der Haut umfasst und wobei eine andere Klasse der Eingabebilder ein Bild von Haut mit einem Klebstoffrückstand auf der Haut umfasst.

2. Verfahren nach einem der vorhergehenden Ansprüche, wobei die untrainierte Schicht unter Verwendung jedes Bilds in den Eingabebildern durch Folgendes trainiert wird:

   Eingeben eines Bilds der Eingabebilder in das vortrainierte neuronale Netzwerk;
   Erzeugen einer Repräsentation des Eingabebilds aus einer letzten Schicht des vortrainierten neuronalen Netzwerks;
   Eingeben der Repräsentation des Eingabebilds in die untrainierte Schicht, um eine prognostizierte Klasse des Eingabebilds zu erzeugen;
   Vergleichen der prognostizierten Klasse des Eingabebilds mit der Klasse des Eingabebilds;
   Optimieren eines Verlusts zwischen der prognostizierten Klasse und der Klasse des Bilds; und
   Aktualisieren einer Gewichtung der untrainierten Schicht gemäß dem optimierten Verlust, wobei die letzte Schicht des vortrainierten neuronalen Netzwerks vorzugsweise eine Faltungsschicht, eine Pooling-Schicht, eine Aktivierungsschicht oder eine Abflachungsschicht ist.

3. Verfahren nach Anspruch 2, wobei die Repräsentation des Eingabebilds durch Eingeben einer Ausgabe der letzten Schicht des vortrainierten neuronalen Netzwerks in eine weitere untrainierte Schicht erzeugt wird, wobei die Ausgabe vorzugsweise eine Merkmalsabbildung ist.

4. Verfahren nach einem der vorhergehenden Ansprüche, wobei die untrainierte Schicht eine vollständig verbundene Schicht ist, wobei die vollständig verbundene Schicht vorzugsweise eine dichte Schicht mit einer Einheit zur binären Klassifizierung der Eingabebilder in eine Klasse der Eingabebilder ist.

5. Verfahren nach einem der Ansprüche 4 bis 6, wobei die weitere untrainierte Schicht keine vollständig verbundene Schicht ist und wobei die weitere untrainierte Schicht vorzugsweise eine Pooling-Schicht ist, wobei die Pooling-Schicht besonders bevorzugt eine Global-Average-Pooling-2D-Schicht ist, die dazu konfiguriert ist, die Ausgabe der letzten Schicht des vortrainierten neuronalen Netzwerks zu mitteln, um die Repräsentation zu erzeugen.

6. Verfahren nach einem der vorhergehenden Ansprüche, wobei die vortrainierte Schicht eine vollständig verbundene Schicht ist, wobei die vollständig verbundene Schicht vorzugsweise zur Klassifizierung verwendet wird, und/oder
wobei weitere Schichten in dem vortrainierten neuronalen Netzwerk ersetzt werden, wobei die weiteren Schichten vorzugsweise eine Pooling-Schicht und eine Dropout-Schicht umfassen.

7. Verfahren nach einem der vorhergehenden Ansprüche, wobei das neuronale Netzwerk, sobald die untrainierte Schicht trainiert ist, unter Verwendung jedes Bilds in den Eingabebildern durch Folgendes weiter trainiert wird:

   Eingeben eines Bilds der Eingabebilder in das neuronale Netzwerk; und
   Anpassen einer Gewichtung einer verbleibenden Schicht des vortrainierten neuronalen Netzwerks und der Gewichtung der untrainierten Schicht während einer Rückpropagierung, um die Gewichtung der verbleibenden Schicht und die Gewichtung der untrainierten Schicht feinabzustimmen.

8. Verfahren nach einem der vorhergehenden Ansprüche, wobei die Eingabebilder vorverarbeitet und/oder augmentiert werden, wobei das Vorverarbeiten vorzugsweise ein Auffüllen und/oder ein Dehnen des Bilds umfasst und die Augmentierung Pixeloperationen und/oder räumliche Operationen an den vorverarbeiteten Bildern umfasst.

9. Verfahren nach Anspruch 8, wobei das Vorverarbeiten aufeinanderfolgende Schritte einer optionalen Kontrastverstärkung umfasst, gefolgt von einer Binarisierung, einem Öffnen, einem Konturieren und einer Verwendung eines aus dem Konturieren erstellten Begrenzungsrahmens, um den Hintergrund des Hautbilds zu entfernen.

10. Verfahren nach Anspruch 8 oder 9, wobei die Eingabebilder augmentiert werden, um neue augmentierte Eingabebilder für eine oder mehrere Trainingsepochen des neuronalen Netzwerks zu erzeugen, wobei die Eingabebilder vorzugsweise zwischen Epochen während des Trainings des neuronalen Netzwerkmodells augmentiert werden.

11. Verfahren nach einem der vorhergehenden Ansprüche, wobei eine Fähigkeit des neuronalen Netzwerkmodells, vorgesehene Bereiche in dem Eingabebild zur Klassifizierung zu identifizieren, unter Verwendung einer mittleren Intensität eines Gradienten einer letzten Faltungsschicht des neuronalen Netzwerkmodells bestimmt wird, wobei die vorgesehenen Bereiche Bereiche der Eingabebilder mit Haut und/oder Haut mit Klebstoffrückstand sind.

12. Verfahren nach einem der vorhergehenden Ansprüche, wobei die Eingabebilder in drei Kategorien klassifiziert sind, wobei eine erste Kategorie Bilder umfasst, die unter direkter Beleuchtung durch eine Lichtquelle aufgenommen wurden, eine zweite Kategorie Bilder umfasst, die mit einem Kreuzpolarisationsfilters aufgenommen wurden, und eine dritte Kategorie Bilder umfasst, die unter Beleuchtung einer ultravioletten Lichtquelle aufgenommen wurden.

13. Computerprogramm, das, wenn es auf einem Computer ausgeführt wird, den Computer veranlasst, ein Verfahren zum Trainieren eines neuronalen Netzwerkmodells zum Nachweisen von Klebstoffrückstand auf Haut durchzuführen, umfassend:

    Laden eines vortrainierten neuronalen Netzwerks;
    Ersetzen einer vortrainierten Schicht in dem vortrainierten neuronalen Netzwerk durch eine untrainierte Schicht;
    Trainieren der untrainierten Schicht unter Verwendung von Eingabebildern, um die Eingabebilder zu klassifizieren;
    wobei eine Klasse der Eingabebilder ein Bild von Haut ohne einen Klebstoffrückstand auf der Haut umfasst und wobei eine andere Klasse der Eingabebilder ein Bild von Haut mit einem Klebstoffrückstand auf der Haut umfasst.

14. Informationsverarbeitungsvorrichtung, die dazu konfiguriert ist, ein neuronales Netzwerkmodell zum Nachweisen von Klebstoffrückstand auf Haut zu trainieren, umfassend einen Speicher und einen mit dem Speicher verbundenen Prozessor, wobei der Prozessor zu Folgendem konfiguriert ist:

    Laden eines vortrainierten neuronalen Netzwerks;
    Ersetzen einer vortrainierten Schicht in dem vortrainierten neuronalen Netzwerk durch eine untrainierte Schicht;
    Trainieren der untrainierten Schicht unter Verwendung von Eingabebildern, um die Eingabebilder zu klassifizieren;
    wobei eine Klasse der Eingabebilder ein Bild von Haut ohne einen Klebstoffrückstand auf der Haut umfasst und wobei eine andere Klasse der Eingabebilder ein Bild von Haut mit einem Klebstoffrückstand auf der Haut umfasst.

15. Computerimplementiertes Verfahren zum Nachweisen von Klebstoffrückstand auf Haut unter Verwendung eines neuronalen Netzwerkmodells, umfassend;

    Trainieren des neuronalen Netzwerkmodells nach einem der Ansprüche 1 bis 12;
    Laden des neuronalen Netzwerkmodells;
    Eingeben eines Bilds von Haut mit oder ohne Klebstoffrückstand auf der Haut;
    Klassifizieren des Bilds in eine Klasse der Trainingsbilder.

## Revendications

1. Procédé mis en œuvre par ordinateur d'entraînement d'un modèle de réseau neuronal pour la détection de résidu d'adhésif sur la peau, comprenant,

    le chargement d'un réseau neuronal pré-entraîné ;
    le remplacement d'une couche pré-entraînée dans le réseau neuronal pré-entraîné par une couche non entraînée ; l'entraînement de la couche non entraînée à l'aide d'images d'entrée pour classifier les images d'entrée ;
    dans lequel une classe des images d'entrée comprend une image de peau sans résidu adhésif sur la peau et dans lequel une autre classe des images d'entrée comprend une image de peau avec un résidu adhésif sur la peau.

2. Procédé selon une quelconque revendication précédente, dans lequel la couche non entraînée est entraînée à l'aide de chaque image des images d'entrée par :

    l'introduction d'une image parmi les images d'entrée dans le réseau neuronal pré-entraîné ;
    la génération d'une représentation de l'image d'entrée à partir d'une dernière couche du réseau neuronal pré-entraîné ;
    l'introduction de la représentation de l'image d'entrée dans la couche non entraînée afin de générer une classe prédite de l'image d'entrée ;
    la comparaison de la classe prédite de l'image d'entrée avec la classe de l'image d'entrée ;
    l'optimisation de la perte entre la classe prédite et la classe de l'image ; et
    la mise à jour d'un poids de la couche non entraînée en fonction de la perte optimisée, de préférence dans lequel la dernière couche du réseau neuronal pré-entraîné est une couche convolutionnelle, une couche de pooling, une couche d'activation ou une couche d'aplatissement.

3. Procédé selon la revendication 2, dans lequel la représentation de l'image d'entrée est générée en introduisant une sortie de la dernière couche du réseau neuronal pré-entraîné dans une autre couche non entraînée, de préférence dans lequel la sortie est une carte de caractéristiques.

4. Procédé selon une quelconque revendication précédente, dans lequel la couche non entraînée est une couche entièrement connectée, de préférence dans lequel la couche entièrement connectée est une couche dense à une unité pour la classification binaire des images d'entrée dans une classe des images d'entrée.

5. Procédé selon l'une quelconque des revendications 4 à 6, dans lequel la couche non entraînée supplémentaire n'est pas une couche entièrement connectée, et de préférence dans lequel la couche non entraînée supplémentaire est une couche de pooling, de manière davantage préférée dans lequel la couche de pooling est une couche de pooling moyenne globale 2D configurée pour faire la moyenne de la sortie de la dernière couche du réseau neuronal pré-entraîné afin de générer la représentation.

6. Procédé selon une quelconque revendication précédente, dans lequel la couche pré-entraînée est une couche entièrement connectée, de préférence dans lequel la couche entièrement connectée est utilisée pour la classification, et/ou dans lequel des couches supplémentaires du réseau neuronal pré-entraîné sont remplacées, de préférence dans lequel les couches supplémentaires comprennent une couche de pooling et une couche d'abandon.

7. Procédé selon une quelconque revendication précédente, dans lequel, une fois que la couche non entraînée a été entraînée, le réseau neuronal est entraîné davantage à l'aide de chaque image des images d'entrée par :

l'introduction d'une image parmi les images d'entrée dans le réseau neuronal ; et l'ajustement du poids d'une couche restante du réseau neuronal pré-entraîné et du poids de la couche non entraînée lors d'une rétropropagation pour affiner le poids de la couche restante et le poids de la couche non entraînée.

8. Procédé selon une quelconque revendication précédente, dans lequel les images d'entrée sont prétraitées et/ou augmentées, de préférence dans lequel le prétraitement comprend le remplissage et/ou l'étirement de l'image, et l'augmentation comprenant des opérations de pixel et/ou des opérations spatiales sur les images prétraitées.

9. Procédé selon la revendication 8, dans lequel le prétraitement comprend des étapes consécutives d'amélioration du contraste optionnelle, suivies d'une binarisation, d'une ouverture, d'un contourage et de l'utilisation d'une boîte englobante construite à partir du contourage, pour supprimer l'arrière-plan de l'image de peau.

10. Procédé selon la revendication 8 ou 9, dans lequel les images d'entrée sont augmentées pour générer de nouvelles images d'entrée augmentées pour une ou plusieurs époques d'entraînement du réseau neuronal, de préférence dans lequel les images d'entrée sont augmentées entre les époques pendant l'entraînement du modèle de réseau neuronal.

11. Procédé selon une quelconque revendication précédente, dans lequel une capacité du modèle de réseau neuronal à identifier les régions cibles dans l'image d'entrée pour la classification est déterminée à l'aide d'une intensité moyenne d'un gradient d'une dernière couche convolutionnelle du modèle de réseau neuronal, les régions cibles étant des régions des images d'entrée avec une peau et/ou une peau avec un résidu d'adhésif.

12. Procédé selon une quelconque revendication précédente, dans lequel les images d'entrée sont classées en trois catégories, une première catégorie comprenant des images prises sous éclairage direct par une source lumineuse, une deuxième catégorie comprenant des images prises avec un filtre polarisant croisé appliqué et une troisième catégorie comprenant des images prises sous éclairage d'une source de lumière ultraviolette.

13. Programme informatique qui, lorsqu'il est exécuté sur un ordinateur, amène l'ordinateur à mettre en œuvre un procédé d'entraînement d'un modèle de réseau neuronal pour la détection d'un résidu d'adhésif sur la peau, comprenant :

le chargement d'un réseau neuronal pré-entraîné ; le remplacement d'une couche pré-entraînée dans le réseau neuronal pré-entraîné par une couche non entraînée ; l'entraînement de la couche non entraînée à l'aide d'images d'entrée pour classifier les images d'entrée ; dans lequel une classe des images d'entrée comprend une image de peau sans résidu adhésif sur la peau et dans lequel une autre classe des images d'entrée comprend une image de peau avec un résidu adhésif sur la peau.

14. Appareil de traitement de l'information configuré pour entraîner un modèle de réseau neuronal destiné à détecter un résidu d'adhésif sur la peau, comprenant une mémoire et un processeur connecté à la mémoire, dans lequel le processeur est configuré pour :

charger un réseau neuronal pré-entraîné ;
remplacer une couche pré-entraînée dans le réseau neuronal pré-entraîné par une couche non entraînée ;
entraîner la couche non entraînée à l'aide d'images d'entrée pour classifier les images d'entrée ;
dans lequel une classe des images d'entrée comprend une image de peau sans résidu adhésif sur la peau et dans lequel une autre classe des images d'entrée comprend une image de peau avec un résidu adhésif sur la peau.

15. Procédé mis en œuvre par ordinateur de détection d'un résidu d'adhésif sur la peau à l'aide d'un modèle de réseau neuronal comprenant ;

l'entraînement du modèle de réseau neuronal selon l'une quelconque des revendications 1 à 12 ;
le chargement du modèle de réseau neuronal ;
l'introduction d'une image de peau avec ou sans résidu d'adhésif sur la peau ;
la classification de l'image dans une classe des images d'entraînement.

100

140

130

120

110

Fully connected dense layers

Feature extraction (e.g., convolutional layers, pooling layers, activation layers)

Input Data

Figure 1

Figure 2a

Figure 2b

Figure 3a

Figure 3b

Figure 4

Figure 5a

Figure 5b

500c

510c

520c

530c

540c

560c

570c

Figure 5c

600a

S10

Loading a pretrained neural network;

S20

Replacing a pretrained layer in the pretrained neural network with an untrained layer;

S30

Training the untrained layer using input images to classify the input images.

Figure 6a

600b

## Offline Data Augmentation

| Dataset | → | Offline augmentation | → | Static dataset with augmented data. | → | Run training for all epochs. |

610b
620b
630b
640b

Figure 6b

EP 4 685 755 B1

**Online Data Augmentation**

Dataset → Loading images of dataset → Online augmentation → Augm. dataset → Run training for an epoch

Re initialize new images

610c   620c   630c   640c   650c   600c

**Figure 6c**

700

710   715   720

717

Figure 7

800   810   820

Figure 8

900a

Figure 9a

900b

Figure 9b

Figure 9c

Figure 9d

1000

Figure 10a

1050

History Loss.
EfficientNetB7_minus4

History Loss.
EfficientNetB7_minus5

1060

History Loss.
EfficientNetB7_minus4

History Loss.
EfficientNetB7_minus5

1070

History Loss.
EfficientNetB7_minus4

History Loss.
EfficientNetB7_minus5

Figure 10b

1100

S100

Loading a neural network model;

S110

Inputting an image of skin with or without adhesive residue on the skin;

S120

Classifying the image into a class of training images.

Figure 11

1200

PROCESSOR

1203

MEMORY

1204

1202

1205

DISPLAY

1206

INPUT

1207

NETWORK I/F

Figure 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHUNG GRACE et al.** Optimizing Ultraviolet Illumination for Detecting Fluorescent Orthodontic Adhesive Residues during Debonding Procedures. *MATER*, 17 June 2024, vol. 17 (12), ISSN 1996 1944, 2961
- **MARIA DEL PILAR BONILLA TOBAR et al.** Skinly: A novel handheld IoT device for validating biophysical skin characteristics. *SKIN RESEARCH AND TECHNOLOGY, MUNKSGAARD, COPENHAGEN, DK*, 28 February 2024, vol. 30 (3), ISBN 0909-752X
- **SAGAR SHARMA**. Activation Functions in Neural Networks. *Towards Data Science*
- Efficientnet: Rethinking model scaling for convolutional neural networks. **TAN, M.** ; **LE, Q.** International conference on machine learning. PMLR, May 2019, 6105-6114
- **TOBAR, M.D.P.B.** ; **CLEMANN, S.** ; **HAGENS, R.** ; **PAGEL-WOLFF, S.** ; **HOPPE, S.** ; **BEHM, P.** ; **ENGELHARD, F.** ; **LANGHALS, M.** ; **GALLINAT, S.** ; **ZHAVORONKOV, A.** Skinly: A novel handheld IoT device for validating biophysical skin characteristics. *Skin Research and Technology*, 2024, vol. 30 (3), e13613